# EUROPEAN PATENT SPECIFICATION

(11) **EP 1 553 288 B1**
(45) Date of publication and mention of the grant of the patent: **09.12.2015**
(21) Application number: 03758733.4
(22) Date of filing: 17.10.2003
(51) Int. Cl.: F02M 69/04, F02D 9/02, F02D 9/14, F02D 9/16, F02B 23/08, F02B 31/04, F02B 31/08, F02D 9/10, F02M 61/14, F02M 35/10

(54) **ENGINE**
MOTOR
MOTEUR

(30) Priority: 18.10.2002 JP 2002303782
(43) Date of publication of application: 13.07.2005
(73) Proprietor: Yamaha Hatsudoki Kabushiki Kaisha, Iwata-shi, Shizuoka 438-8501 (JP)
(72) Inventor: TSUZUKU, Hiroyuki, Yamaha Hatsudoki KK, Iwata-shi, Shizuoka 438-8501 (JP); ISHII, Wataru, Yamaha Hatsudoki KK, Iwata-shi, Shizuoka 438-8501 (JP); HANAJIMA, Toshiharu, Yamaha Hatsudoki KK, Iwata-shi, Shizuoka 438-8501 (JP)
(74) Representative: Grünecker Patent- und Rechtsanwälte PartG mbB
(86) International application number: PCT/JP2003/013289
(87) International publication number: WO 2004/040130

(56) References cited:
- EP-A1- 1 559 909
- JP-A- 5 340 326
- JP-A- 5 340 326
- JP-A- 6 213 107
- JP-A- 6 257 432
- JP-A- 6 257 432
- JP-A- 6 272 588
- JP-A- 9 166 064
- JP-A- 9 166 064
- JP-A- 10 103 196
- JP-A- 10 103 196
- JP-A- 11 036 898
- JP-A- 11 148 374
- JP-A- 54 151 718
- JP-A- 58 119 966
- JP-A- 60 212 665
- JP-A- 61 286 579
- JP-A- 2000 204 969
- JP-U- 1 118 159
- JP-U- 2 067 070
- JP-U- 61 167 474
- JP-U- 63 191 271
- US-A- 4 313 410
- US-A- 5 829 408

## Description

The present invention relates to an engine designed to facilitate atomization of a fuel by supplying air for atomization (assist air) near an injection nozzle of a fuel injection valve at least in operation with a low load.

Prior art document US 5,829,408 discloses an engine that comprises an air supply section that supplies air into a cylinder; and an injector disposed at such an angle that a fuel injection port is arranged opposite to intake valve openings of said cylinder and a mixture of a fuel injected from said fuel injection port and said air generates air motion in said cylinder. The air-fuel mixture is directly injected from said intake valve openings which are opened during fuel injection of said injector into said cylinder to generate said air motion. Said injector has said fuel injection port disposed between an axis of an intake valve and a center axis of an intake port.

An intake device of an engine, in which an assist air is used to facilitate atomization of a fuel, conventionally includes one, in which a fuel injection valve is arranged downstream of a throttle valve in a main passage communicated to intake valve opening and a sub-passage provides communication between an upstream side of the throttle valve in the main passage and an injection passage, in which an injection nozzle of the fuel injection valve (hereinafter referred to as "injector") is disposed (see, for example, Unexamined Japanese Patent Publication No.HEI09-014102).

However, in the above described conventional intake device, the injector installed in a position upstream of and away from the intake valve openings, and therefore most of the fuel injected from the injector adheres to wall surfaces of an injection passage and wall surfaces of the main passage until the fuel reaches the intake valve openings.

When the amount of fuel adhering to wall surfaces of the injection passage or wall surfaces of the main passage increases, the mixing ratio of air and fuel injected into a combustion chamber differs from a predetermined mixing ratio, and unburned gas is exhausted which worsens exhaust gas conditions, causing the fuel to be injected into a cylinder without being sufficiently gasified, deteriorating fuel or exhaust gas conditions and further causing insufficient responsibility to a throttling operation.

It is an object of the present invention to provide an engine which allows to reduce the amount of fuel adhering to wall surfaces without deteriorating combustion characteristics and improve exhaust gas conditions and throttle responsivity.

According to the present invention said object is solved by an engine having the features of independent claim 1. Preferred embodiments are laid down in the dependent claims.

Accordingly, it is provided an engine in which an injector is arranged at such an angle that a fuel injection port is disposed opposite to intake valve openings and a mixture of a fuel injected from the fuel injection port and air generates air motion in a cylinder and the air-fuel mixture is directly injected from the intake valve openings opened during fuel injection of the injector into the cylinder to thereby generate the air motion.

### Brief Description of Drawings

FIG.1 is a cross-sectional side view of an engine according to Embodiment 1 of the present invention;
FIG.2 is a cross-sectional plan view of the engine according to Embodiment 1;
FIG.3A is a schematic view showing a communication hole which provides communication between an air chamber and an inj ection port of the engine according to Embodiment 1;
FIG. 3B is a schematic view showing the communication hole which provides communication between the air chamber and the injection port, disposed opposite to a sub-passage;
FIG.4 illustrates a load-throttle valve opening characteristic graph of the engine according to Embodiment 1;
FIG.5 illustrates a characteristic graph showing fuel consumption of the engine according to Embodiment 1;
FIG.6 illustrates behavior of an air-fuel ratio in the cylinder when an amount of fuel injection is increased in a steady-state operation of the engine according to Embodiment 1;
FIG.7 illustrates behavior of an air-fuel ratio in the cylinder when the amount of fuel inj ection is reduced to 0 in a steady-state operation of the engine according to Embodiment 1;
FIG.8 illustrates a pressure waveform in an intake port when the volume of the port of the engine according to Embodiment 1 is changed;
FIG.9 is a schematic view showing a change of the pressure waveform in the intake port shown in FIG.8;
FIG.10A illustrates an influence of the volume of the intake port of the engine in an idle state on combustion and shows a relationship between the volume of the intake port and amount of exhaust THC (total hydrocarbon);
FIG.10B illustrates an influence of the volume of the intake port of the engine in an idle state on combustion and shows a relationship between the volume of the intake port and fuel consumption;
FIG.10C illustrates an influence of the volume of the intake port of the engine in an idle state on combustion and shows a relationship between the volume of the intake port and rotation fluctuation rate;
FIG.11 is a cross-sectional side view showing a modification example of an area in which an injector is mounted;
FIG.12 is a cross-sectional side view showing a modification example of an area in which an injector is mounted;
FIG.13 is a cross-sectional side view showing a modification example of an area in which an injector is mounted;
FIG.14 is a cross-sectional side view showing a modification example of an area in which an injector is mounted;
FIG.15 is a cross-sectional side view showing a modification example of an area in which an injector is mounted;
FIG.16A is a cross-sectional plan view showing a configuration of an engine according to Embodiment 2 of the present invention;
FIG.16B is a cross-sectional side view showing a configuration of the engine according to Embodiment 2 of the present invention;
FIG.17A is a cross-sectional side view showing an example of an opening/closing mechanism of a first throttle valve;
FIG.17B illustrates operation of the opening/closing mechanism of a first throttle valve in stages;
FIG.18 is a block diagram showing an example of an ECU of the engine according to Embodiment 2;
FIG.19 illustrates an operating state of the engine shown in FIG.16;
FIG.20A is a cross-sectional plan view showing a configuration of an engine according to Embodiment 3 of the present invention;
FIG.20B is a cross-sectional side view showing a configuration of the engine according to Embodiment 3 of the present invention;
FIG.21 illustrates an operating state of the engine shown in FIG.20;
FIG.22 is a cross-sectional side view showing a configuration of an engine according to Embodiment 4 of the present invention;
FIG. 23A illustrates an air supply state of the engine in FIG.22 and is a cross-sectional side view showing a state of a rotary valve when an air supply path is fully closed;
FIG. 23B illustrates an air supply state of the engine in FIG.22 and is a cross-sectional side view showing a state of the rotary valve in a low-load operating period;
FIG.24A is a cross-sectional side view showing a modification example 1 of the engine according to Embodiment 4 and is a cross-sectional side view showing an accelerator fully open state of the engine;
FIG.24B is a cross-sectional side view showing the modification example 1 of the engine according to Embodiment 4 and is a cross-sectional side view showing a state of the rotary valve in a low-load operating period of the engine;
FIG.25A is a cross-sectional side view showing a modification example 2 of the engine according to Embodiment 4 and is a cross-sectional side view showing an accelerator fully open state of the engine; and
FIG.25B is a cross-sectional side view showing the modification example 2 of the engine according to Embodiment 4 and is a cross-sectional side view showing a rotary valve state of the engine in the low-load operating period of the engine.

With reference now to the attached drawings, embodiments of the present invention will be explained in detail below.

### (Embodiment 1)

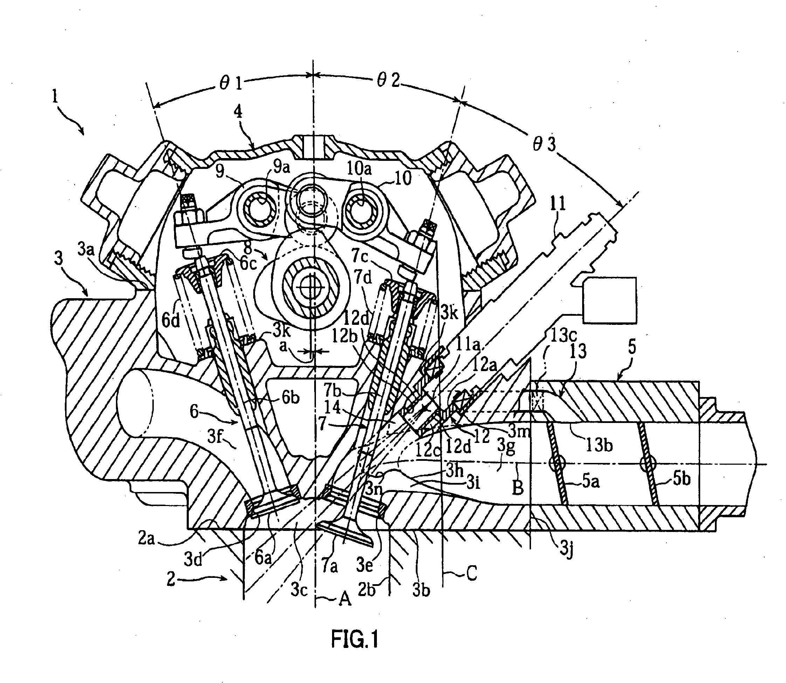

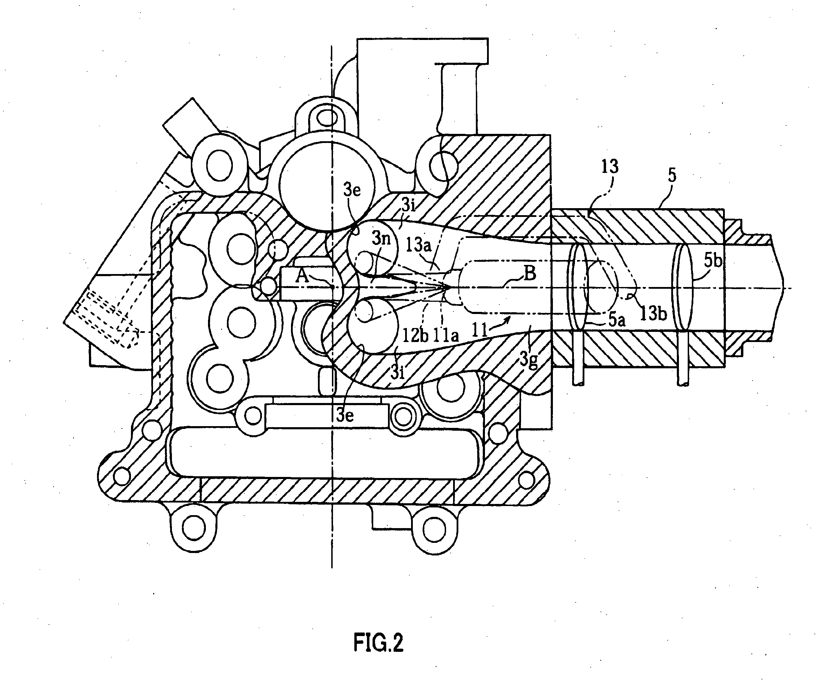

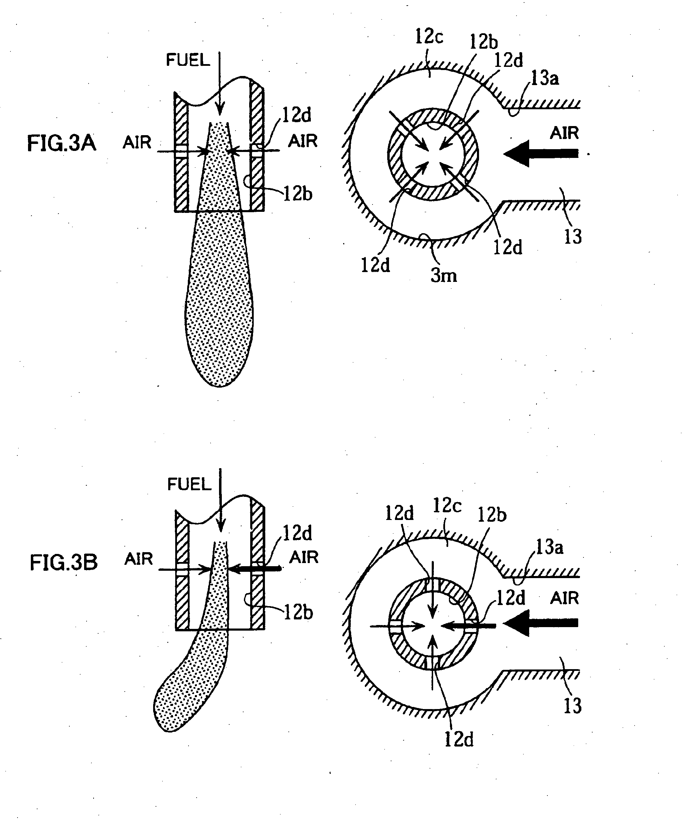

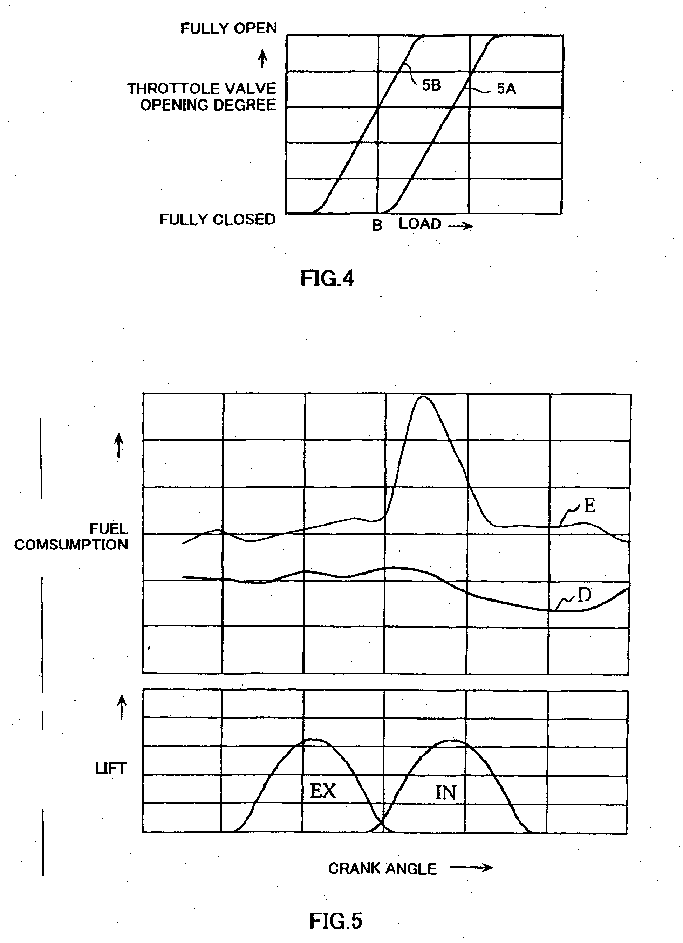

FIG.1 to FIG.5 illustrate an intake device of an engine for a motorcycle according to Embodiment 1 of the invention, FIG.1 being a cross sectional side view, FIG.2 being a cross sectional plan view, FIG. 3 being a schematic view showing an injection port, FIG.4 being a characteristic graph showing a relationship between loads and opening degrees in first and second throttle valves, and FIG.5 being a characteristic graph showing a relationship between fuel injection timing and fuel consumption. Note that the front, rear, left, and right referred to in this embodiment mean the front, rear, left, and right viewed from the rider who is seated in the vehicle with the engine mounted in the body frame.

An engine 1 shown in FIG.1 and FIG.2 is provided with an air supply section that supplies air to a cylinder via intake valve openings 3e and an injector 11 arranged at such an angle that the fuel injection port is disposed opposite to intake valve openings 3e and a mixture of a fuel injected from the fuel injection port and air generates air motion in the cylinder, and is configured in such a way that the air-fuel mixture is directly injected from the intake valve openings 3e opened during fuel injection of the injector 11 into the cylinder to generate the air motion.

Furthermore, the engine 1 shown in FIG.1 and FIG.2 is further provided with an intake valve mounting section in which an intake valve 7 for taking a gas into a combustion chamber is mounted, an exhaust valve mounting section in which an exhaust valve 6 for exhausting an exhaust gas from the combustion chamber is mounted, an intake port 3g which supplies external air into the intake valve, an injector mounting section in which the injector 11 for injecting the fuel is mounted and a cylinder head **3** with which the intake valve mounting section, exhaust valve mounting section, intake port 3g and injector mounting section are formed integral.

More specifically, the engine 1 shown in FIG.1 and FIG.2 is a water-cooling type 4-cycle single-cylinder engine. This engine 1 includes a cylinder block 2 having a vertical cylinder axis, a cylinder head 3 stacked and clamped to an upper mating surface 2a of this cylinder block 2 and a head cover 4 mounted on the upper mating surface 3a of this cylinder head 3.

A piston (not shown) is inserted into and arranged slidably within a cylinder bore 2b of the cylinder block 2. The piston is connected to a crankshaft through a conrod (not shown).

Formed concavely on a lower mating surface 3b of the cylinder head 3 is a combustion recess 3c having an opening downward, which, together with the piston in the cylinder bore 2b, forms a combustion chamber. This combustion recess 3c is provided with exhaust valve openings 3d and intake valve openings 3e, two each, which are communicated to the combustion chamber.

The exhaust valve openings 3d, 3d are connected to an exhaust port 3f formed in the cylinder head 3 and the exhaust gas from the exhaust valve openings 3d is conducted to a front wall side of the cylinder head 3 via the exhaust port 3f. Furthermore, the intake valve openings 3e, 3e are connected to the intake port 3g formed in the cylinder head 3 and the intake air into the intake valve openings 3e is guided from a rear wall side of the cylinder head 3 via the intake port 3g.

The exhaust valve openings 3d, 3d are opened and closed by valve head 6a of exhaust valves 6 which moves forward and backward in directions perpendicular to the plane of the exhaust valve openings 3d.

The exhaust valve 6 is arranged in the cylinder head 3 and has valve head 6a and valve shaft 6b, the valve head 6a being provided at the end of the valve shaft 6b. The valve shaft 6b is arranged on a front side of the engine to be inclined at an angle θ1 relative to a cylinder axis A. Furthermore, retainer 6c is provided at the upper end (base end) of the valve shaft 6b and valve springs 6d interposed between the retainer 6c and spring seat 3k formed on the cylinder head 3 bias the exhaust valve 6 in directions, in which the valve shaft 6b separates from the exhaust valve opening 3d, that is, the directions in which the valve head 6a closes the exhaust valve opening 3d.

Also, the intake valve openings 3e are opened and closed by valve head 7a of intake valves 7, which move forward and backward in directions perpendicular to the opening plane of the intake valve openings 3e.

The intake valve 7 is arranged in the head cylinder 3 and include valve head 7a and valve shaft 7b, the valve head 7a being provided at the end of the valve shaft 7b. The valve shaft 6b is arranged on a rear side of the engine to be inclined at an angle θ2 relative to a cylinder axis A. Also, retainer 7c is mounted on the upper end (base end) of the valve shaft 7b and valve spring 7d interposed between the retainer 7c and spring seat 3k formed on the cylinder head 3 bias the intake valve 7 in directions, in which the valve shaft 7b separates from the intake valve opening 3e, that is, in directions in which the valve head 7a closes the intake valve opening 3e.

A cam shaft 8 for both intake and exhaust is rotatably arranged between the valve spring 6d, 7d of the exhaust valve 7 and the intake valve 6 on the cylinder head 3.

Furthermore, an exhaust rocker arm 9 is arranged above and between the cam shaft 8 and the exhaust valve 6 to be rotatably supported by an exhaust rocker shaft 9a. Also, an intake rocker arm 10 is arranged above and between the cam shaft 8 and the intake valve 7 to be rotatably supported by an intake rocker shaft 10a. These rocker arms 9 and 10 contact the cam of the cam shaft 8 at one end, press the upper ends of the valve shafts 6b and 7b at the other end as the cam shaft 8 rotates and move the valve shafts 6b and 7b against the biased direction. These exhaust rocker shaft 9a and the intake rocker shaft 10a are supported by boss portions, which are projectingly provided on an inner surface of the head cover 4.

Here, the cam shaft 8 is arranged to be offset a distance a from the cylinder axis A. Thus, the angle θ2 of the intake valves 7 relative to the cylinder axis A is correspondingly set to be smaller than the angle θ1 of the exhaust valve 6 relative to the cylinder axis A. That is, the intake valve 7 is arranged in uprights to be close to the cylinder axis A as compared with the exhaust valve 6. As a result, a large space is ensured in an area toward the rear of the engine from the intake valve 7, allowing the injector 11 which will be described later to be freely arranged.

Inside the head cylinder 3, the intake port 3g is bent from the intake valve openings 3e in a direction substantially perpendicular to the cylinder axis A to be extended rearwardly, and constitutes a part of a main passage, through which outside air is introduced into the combustion chamber.

A bent portion at a downstream end of the intake port 3g is branched by a partition 3h into branch passages 3i, 3i, which communicate to the left and right intake valve openings 3e, 3e. Furthermore, an outside connection opening 3j at an upstream end of the intake port is connected to a throttle body 5. In addition, an upstream side of the throttle body 5 is connected to an air cleaner.

The throttle body 5 comprises first and second throttle valves 5a, 5b in this order from a downstream side in the main passage. A sub-passage 13 which branches from the main passage is provided between the first throttle valve 5a and second throttle valve 5b.

As shown in the relationship between opening degrees and loads (amount of throttling operation) in the first and second throttle valves 5a, 5b in FIG.4, the first throttle valve 5a arranged on the downstream side is held in a fully closed state from an operating period with no load (idling) to an operating period b with a predetermined partial load.

In this way, the throttle body 5 is designed to supply a large amount of air for atomization, which facilitates atomization of an injected fuel to a neighborhood of an injection nozzle 11a of the injector 11 via the sub-passage 13. The supply of a large amount of air for atomization to a neighborhood of the injection nozzle 11a facilitates gasification of the injected fuel in operation with a low load.

Also, the second throttle valve 5b arranged on the upstream side is an ordinary one for controlling an area of the main passage according to a throttling operation. In addition, the second throttle valve 5b is connected to a throttle grip of a steering handle via pulleys and a throttle cable, the second throttle valve 5b being connected to the first throttle valve 5a via a linkage mechanism, which produces a predetermined lag.

Then, as shown in FIG.1, the injector 11 is arranged on a roof wall side of the intake port 3g.

The injector 11 is arranged in the head cylinder 3 at such an angle that the fuel injection port is disposed opposite to the intake valve openings 3e and a mixture of the fuel injected from the fuel injection port and air generates air motion such as tumble inside the cylinder.

More specifically, the injector 11 is arranged to be coincident, as viewed in plan view, with a center line B of the intake port 3g and to be inclined toward the engine rear wall, as viewed in an axial direction of the cam shaft, at an angle (θ2 +θ3) relative to the cylinder axis A.

This injector 11 is set in arrangement, angle, or the like with respect to the head cylinder 3 as follows. For example, the injector 11 is disposed so that a mixture of a fuel and an air for atomization passes mainly through that portion of an annular gap between the intake valve openings 3e and the valve head 7a of the intake valve 7 in an opened position, which is disposed on a side toward the cylinder axis A. In addition, the injector 11 is disposed so that the mixture which has passed through the portion on the cylinder axis A is to be injected toward the cylinder axis A along that portion of an inner surface of the cylinder bore 2b, which is disposed on a side of the exhaust valve openings.

Furthermore, in the injector 11, as shown in FIG.2, the diameter of an effective spot of the mixture of the fuel injected from the fuel injection port of the injection nozzle 11a and air at the intake valve openings 3e is smaller than the radius of the intake valve openings. The axis of this effective spot passes through the intake valve openings 3e and crosses an inner peripheral wall of the cylinder.

That is, the injector 11 is disposed so that the injection nozzle 11a, as seen from the horizontal direction in FIG.1, is located within an area connecting the base end of the valve shaft 7b when the intake valve openings 3e are closed with the valve head 7a, an intersection between the axes of the intake valve 7 and the center line B of the intake port 3g and an intersection between the center line B of the intake port 3g and an external connection port 3j at the upstream end of the cylinder head 3.

Note that this injector 11 is preferably disposed in such a way the distance from the opening planes of the intake valve openings 3e to the injection nozzle 11a is no greater than 4.0 cm.

Furthermore, fuel injection of the injector 11 is controlled at timing at which the intake valve openings 3e are open during fuel injection. For example, the injection timing of the injector 11 with respect to the intake valve openings 3e is controlled by a control unit such as an ECU (Engine Control Unit).

A mount hole 3m is formed through the roof wall portion of the intake port 3g to be communicated into the intake port 3g from outside. Furthermore, an injection passage 14 is provided in the vicinity of that portion of the mount hole 3m, which is communicated to the intake port, to conduct an injected fuel into the cylinder bore 2b through the intake valve openings 3e from the intake port 3g. A cylindrical holder 12 is fitted and mounted into the injection passage 14.

This cylindrical holder 12 has a support hole 12a at an outward position in relation to the cylinder head 3 along the axial direction. The injection nozzle 11a of the injector 11 is inserted and fitted in the support hole 12a positioned in a part in the body of the cylinder, on the outer side in relation to the cylinder bore 2b. This injection nozzle 11a is located between the axes of the intake valve 7 and the center axis B of the intake port 3g and disposed so as to approximate to the end of the intake port 3g on the intake valve side.

In addition, a fuel injection port of this injection nozzle 11a is shaped to inject a fuel as branch currents toward the left and right intake valve openings 3e, 3e.

Also, an injection port 12b is defined an inside part of an axial direction of the holder 12, and a fuel having been injected bifurcatingly in two directions from the injection nozzle 11a of the injector 11 is mixed with an air for atomization in the injection port 12b to pass through the branch passages 3i, 3i of the intake port 3g from the injection port 12b to be supplied into the combustion chamber made up of the cylinder bore 2b, etc. Here, the injection port 12b of the holder 12 is opposite to the partition 3h, on which a recessed portion 3n is cut out and formed to avoid striking of a fuel injected from the injector 11 thereagainst. This recessed portion 3n is formed by recessing the end of the partition 3h on the intake valve opening side in such a way that the surface is inclined toward the intake valve openings 3e. With this structure, the recessed portion 3n conducts the injected fuel as branch currents toward the two intake valve openings 3e, 3e even when the injector 11 is disposed in the center of the two branch passages 3i, 3i. This prevents the injected fuel from striking against the partition 3h and prevents the fuel from adhering to the partition 3h.

An annular air chamber 12c is formed between a small-diameter portion formed on an outer periphery of the injection port 12b of the holder 12 and the mount hole 3m (see FIG.1 and FIG.3). This air chamber 12c is communicated into the injection port 12b through a plurality (four in the embodiment) of communication holes 12d, which are formed at equally angular intervals on the holder 12 to extend diametrically through the holder 12.

Also, communicated to the air chamber 12c is a downstream-end opening (connection port) 13a of a sub-passage 13 disposed close to the injection nozzle 11a.

This sub-passage 13 extends upstream along the intake port 3g, and an upstream-end opening 13b thereof is communicated between the first and second throttle valves 5a, 5b of the throttle body 5.

Here, two among the four communication holes 12d, which are disposed toward the downstream-end opening 13a, have their axes forming 45° relative to an axis of the downstream-end opening 13a. That is, the communication holes 12d are formed in directions offset from the downstream-end opening 13a. That is, the downstream-end opening 13a of the sub-passage 13 is disposed opposite to the outer surface of the injection port 12b. This allows the air discharged from the downstream-end opening 13a to flow into the air chamber 12c without directly entering the cylindrical injection port 12b and then flow into the injection port 12b from the respective communication holes 12d provided radially in the injection port 12b.

Subsequently, an explanation will be given to function and effect of the engine according to Embodiment 1.

In an operating period from the operating period with no load to the operating period b with a predetermined partial load (see FIG.4), the first throttle valve 5a arranged on the downstream side is fully closed while the opening and closing of the second throttle valve 5b is controlled according to a throttling operation.

In an operating period with a smaller load than that of the operating period b with the partial load, an intake negative pressure on the engine side acts on the sub-passage 13 as it is, and a whole amount of intake air is introduced into the air chamber 12c through the sub-passage 13 from an interior of the throttle body 5. Then, the intake air is injected from the air chamber 12c into the injection port 12b through the communication holes 12d, where the intake air is mixed fairly with a fuel injected from the fuel injection nozzle 11 while making the fuel particulates. The mixture is supplied into the combustion chamber passing by both sides of the recessed portion 3n of the partition 3h from the left and right intake valve openings 3e.

At this time, the air-fuel mixture is directly injected from the intake valve openings 3e opened during the fuel injection of the injector 11 into the combustion chamber (cylinder), and therefore it is possible to supply the mixture into the combustion chamber in quick response to even an abrupt throttling operation and improve the throttle responsivity such as producing no time lag in an increase in the rotational speed of the engine.

The fuel injection port of the injection nozzle 11a is disposed closer to the cylinder axis A than to a straight line C in parallel to the cylinder axis A and passing through an end of a valve operating mechanism on an intake side, and therefore it is possible to bring the injection nozzle 11a of the injector closer to the intake valve openings 3e.

Therefore, wall surfaces, to which a fuel can adhere, become small in area to correspondingly reduce an amount of fuel adhering to the wall surfaces, so that it is possible to improve fuel consumption in cooling operation and to remedy that deterioration in conditions of exhaust gases, which is caused by discharge of an unburned fuel at the time of fuel cut and at the time of idle stoppage. It is also possible to improve throttle responsivity that an increase in engine rotational speed generates no lag or the like for rapid throttling operation.

Also, the mixture is supplied mainly through that portion of the annular gap between the intake valve openings 3e and the valve head 7a of the opened intake valve 7, which is disposed on an exhaust side, axially along the inner surface of the cylinder bore, so that tumble (longitudinal vortex) is surely generated in the cylinder bore 2a, resulting in improving combustion characteristics as well as the above-mentioned atomization or particulation of a fuel through acceleration of combustion with an enhanced flow.

That is, the injector 11 is disposed at such a position that the diameter of the effective spot of the mixture of the fuel injected from the fuel injection port of the injection nozzle 11a and air at the intake valve openings is smaller than the radius of the intake valve openings 3e and the axis of the effective spot passes through the intake valve openings and crosses the inner peripheral wall of the cylinder. For this reason, the mixture of the fuel injected from the fuel injection port and air passes through the intake valve openings 3e opened during fuel injection and is directly injected into the cylinder at an acute angle. This ensures tumble (longitudinal vortex) is generated in the cylinder bore 2a, resulting in enhancement of the flow of the mixture as well as atomization or atomization of the fuel and improving combustion characteristics through rapid combustion.

According to the embodiment, since the cam shaft 8 is arranged to be offset toward the exhaust side from the cylinder axis A, and the angle θ2 formed between the cylinder axis A and the intake valve 7 is set to be smaller than the angle θ1 formed between the cylinder axis A and the exhaust valve 6. That is, the intake valve 7 are arranged in uprights to be close to the cylinder axis A, and therefore it is possible to ensure a space for arrangement of the injector 11 close to the intake valve openings 3e at the intake side of the cylinder head 3, thus reducing an amount of the fuel adhering to the wall surface and enabling an improvement in responsivity and combustion characteristics. As examples of the angles θ1 and θ2, the angle θ1 may be set to 17° to 27° and angle θ2 may be set to 15° to 25°.

Also, since an area, in which the injection nozzle 11a of the injection passage is disposed, and an area between the first and second throttle valves 5a, 5b of the throttle body 5 (main passage) are communicated to each other by the sub-passage 13, and in an operating period from the operating period with no load to the operating period with the predetermined partial load, the first throttle valve 5a is fully closed, a large amount of intake air can be surely supplied, as an air for atomization, to the injection nozzle 11a whereby atomization of an injected fuel can be facilitated.

Also, as shown in FIG.3A, since those ones among the communication holes 12d for communication between the air chamber 12c and the injection port 12b, which are disposed toward the connection port 13a of the sub-passage 13 connected to the air chamber, form a predetermined angle (45° in the embodiment) or greater relative to an axis of the connection port 13a of the sub-passage 13, it is possible to avoid localization of a flow of the mixture of an injected fuel and the air for atomization, thus making the flow of the mixture easy to flow in an intended direction.

More specifically, in the case where an axis of the communication hole 12d disposed toward the connection port 13a is coincident with an axis of the connection port 13a as shown in FIG.3B, an amount of air flowing from the communication holes 12d in this area becomes larger than an amount of air flowing from the remaining communication holes, and thus the flow of the mixture flows offset and away from the connection port 13a with the result that it is not possible to have the flow of the mixture flowing in an intended direction.

Moreover, since the recessed portion 3n for preventing an injected fuel from striking against the partition 3h defining the left and right branch passages 3i, 3i is formed as shown in FIG.1, striking and adhering of an injected fuel injected as branch flows toward the two intake valve openings 3e, 3e to the inner walls of the branch passages 3i, 3i can be avoided even in the case where the injector 11 is arranged at the center of the two branch passages 3i, 3i.

FIG.5 shows the relationship between timing of injection termination of a fuel from the injector 11 and fuel consumption. In the figure, a curve D indicates fuel consumption in the case of the embodiment and a curve E indicates fuel consumption in the case of injection in a conventional intake pipe, more specifically, in the case where an injector is arranged close to a portion of an intake manifold mounted on a cylinder head. Also, EX and IN, respectively, indicate lift curves of an exhaust valve and an intake valve. As seen from the figure, with the injection in a conventional intake pipe, fuel consumption is sharply worsened when injection is made while the intake valve is opened. Presumably, the main reason for this is that in the case where an injector is simply arranged close to a port of an intake valve, an amount of fuel adhering to a wall surface of an intake port decreases but an injected fuel is introduced into a combustion chamber without evaporation.

Meanwhile, with the embodiment, it is found that the later timing of fuel injection termination since a maximum lift of an intake valve, the higher fuel consumption, that is, a best fuel consumption results in the case where a fuel is injected while the intake valve is opened.

With the embodiment, the injector 11 is arranged immediately close to a port of an intake valve at such an angle that the injection nozzle 11a is opposite to the intake valve openings 3e and a mixture of a fuel injected from the injection nozzle 11a and air surely generates air motion such as tumble and swirl in the cylinder, and tumble in particular. Presumably, an amount of fuel adhering to a wall surface of an intake port sharply decreases and a mixture of an assist air and a fuel generates tumble, whereby it is possible to facilitate atomization and atomization of a fuel.

Thus, according to this embodiment, to achieve the above described best fuel consumption as shown in FIG. 5, the intake valve is opened during injection of the fuel of the injector 11 and the mixture of the injected fuel and air via the intake valve opened during this fuel injection is directly injected into the cylinder. In other words, this embodiment performs control in such a way that the injection of the injector 11 is carried out in synchronization with the opening of the intake valve and directly injects the mixture into the cylinder bore 2b via the intake valve openings 3e opened during injection of the fuel of the injector 11.

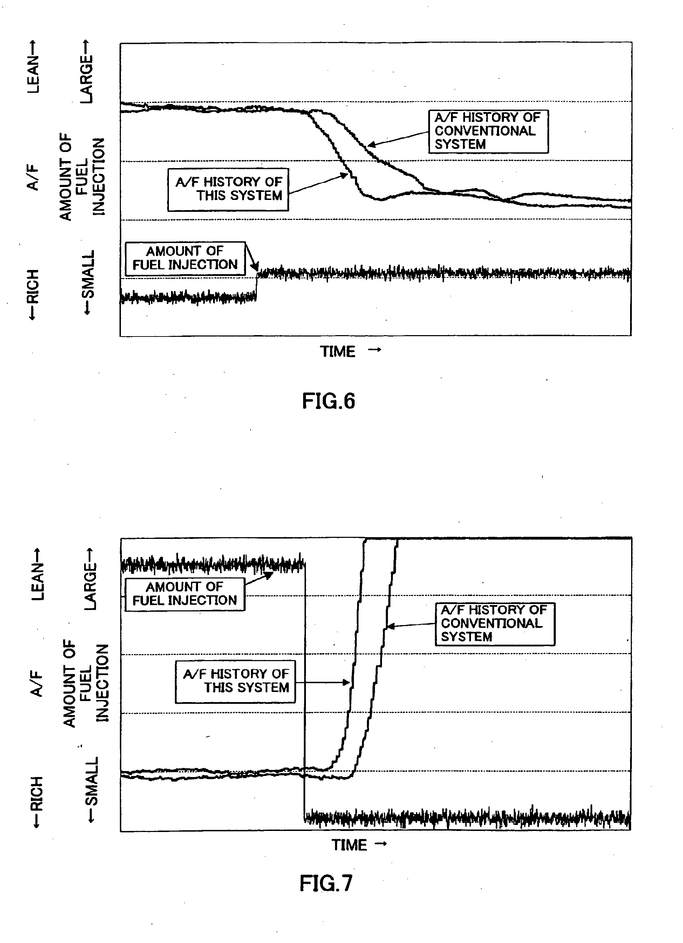

FIG.6 shows the behavior of the air-fuel ratio (hereinafter referred to as "A/F") in the cylinder when the amount of fuel injection is increased in a steady-state operation of the engine according to Embodiment 1. This figure shows an A/F history of a conventional engine with an injector mounted on the intake manifold as well as the A/F history according to this system which shows the A/F behavior based on this embodiment.

As shown in FIG.6, the engine 1 provides quicker A/F response than the conventional engine system in an increase of the fuel and provides improved response of the fuel injection system.

This may be attributable to the fact that since the injector 11 is disposed close to the intake valve openings 3e, the distance until the fuel injected from the injector 11 reaches the interior of the cylinder (cylinder bore 2b) is shorter than the conventional one and the delay in transport of the fuel is thereby shortened.

FIG.7 shows the behavior of the air-fuel ratio (hereinafter referred to as "A/F") in a cylinder when the amount of fuel injection is reduced to 0 in a steady-state operation of the engine according to Embodiment 1. This figure shows not only the A/F history according to this system which shows the A/F behavior based on this embodiment but also the A/F history according to the conventional engine with an injector mounted on the intake manifold.

As shown in FIG.7, when the amount of fuel injection is reduced to 0 in a steady-state operation, the engine 1 provides quicker A/F response than the conventional engine. This may be attributable to the fact that since the injector 11 is disposed close to an end of the intake port on the intake valve opening side, the amount of fuel adhering to the inner wall until it reaches the intake valve openings 3e has been reduced. That is, according to the conventional system, the fuel adhered to the inner wall after fuel inj ection is stopped until the fuel reaches the intake valve openings is supplied into the cylinder. In contrast, the engine 1 according to this embodiment allows a change in the amount of fuel injection to be quickly reflected in the A/F in the cylinder and provides improved response of the fuel injection system compared to the conventional system.

Since this embodiment adopts a structure in which the injector 11 is directly mounted on the head cylinder 3 and the nozzle 11a is arranged close to the intake valve openings 3e, the throttle valve 5a is arranged as close to the head cylinder 3 as possible unlike the conventional fuel inj ection type engine in which the injector is mounted on the intake pipe (intake manifold), thus reducing the volume of the intake port.

Here, the influence of the volume of the intake port on combustion will be explained.

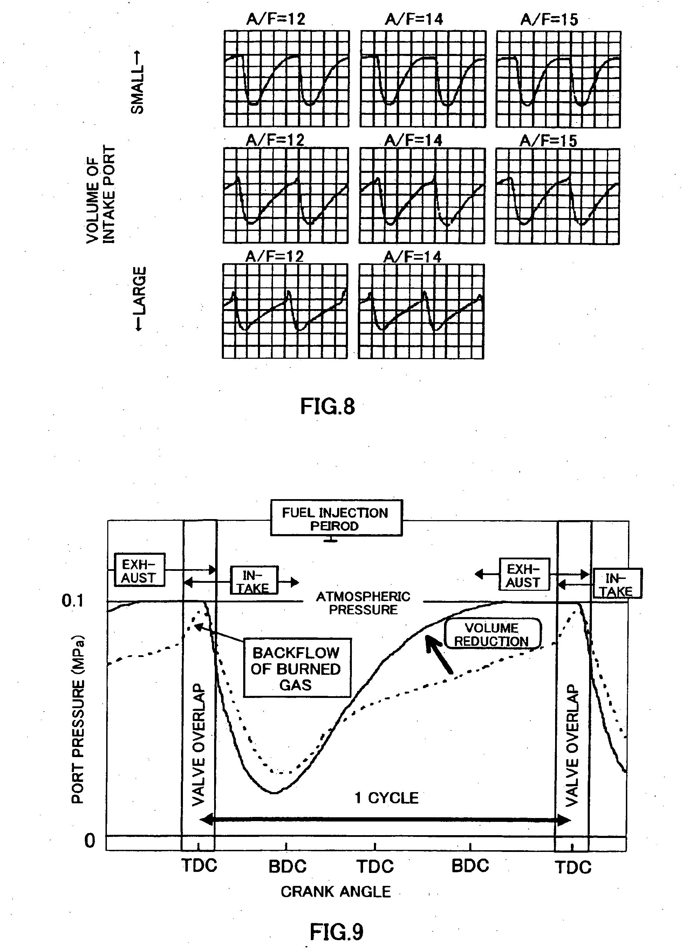

FIG.8 shows a pressure waveform inside the port when the volume of the intake port of the engine according to Embodiment 1 is changed. Furthermore, FIG.9 is a schematic view illustrating a variation of the pressure waveform inside the intake port shown in FIG. 8. Note that in this FIG.9, the port pressure waveform by the engine is indicated by a solid line, while the port pressure waveform when an ordinary 4-cycle engine with an injector mounted in the intake pipe (intake manifold) is in an idle state or in a low-load period is indicated by a broken line.

When the intake valve of an ordinary 4-cycle engine is opened as illustrated with the port pressure waveform indicated by the broken line in FIG.9, since the port pressure is a negative pressure due to the atmosphere, a burned gas flows reversely from the cylinder bore 2b into the intake port, producing exhaust gas recirculation (EGR).

In contrast, since the port volume is reduced in the engine 1 of the embodiment, the air supplied from downstream of the throttle valve 5a into the cylinder bore 2b in the intake step is reduced as illustrated by the port pressure waveform indicated by a solid line in FIG.9. Thus, the throttle opening degree is increased to achieve the same output. This causes the port pressure to approximate to the atmospheric pressure quickly and the pressure in the port becomes the same pressure as the atmospheric pressure when the intake valve is opened. Therefore, since the port volume of the engine 1 is reduced, it is possible to reduce a backward flow of the burned gas in an idling state or in operation with a low load.

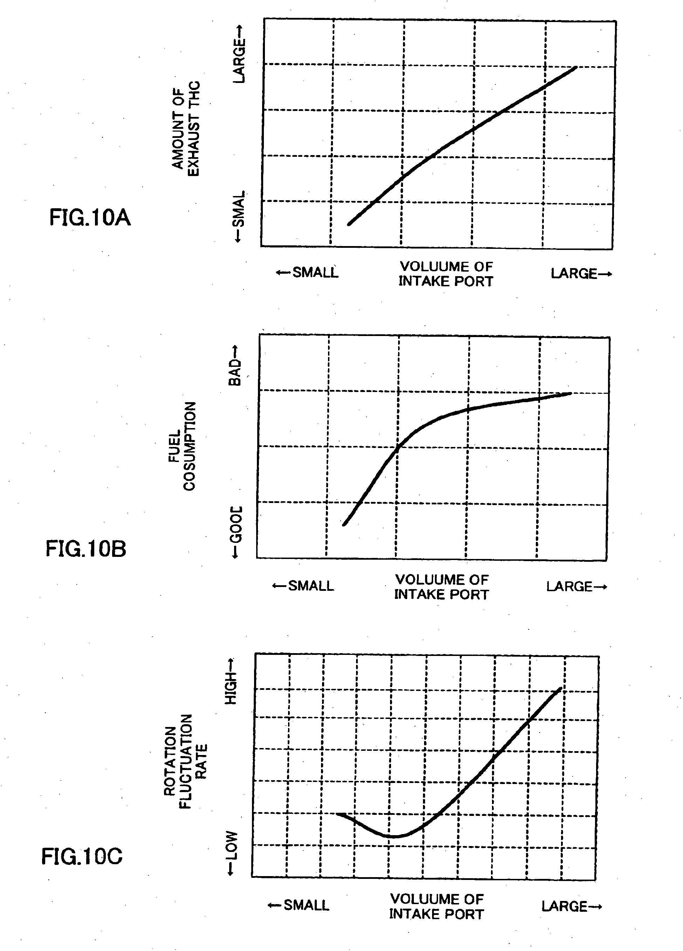

FIG. 10 shows an influence of the volume of the intake port of the engine in an idling state on combustion, FIG . 10A illustrates a relationship between the volume of the intake port and amount of exhaust THC (total hydrocarbon), FIG.10B illustrates a relationship between the volume of the intake port and fuel consumption and FIG.10C illustrates a relationship between the volume of the intake port and rotation fluctuation rate.

As shown in FIG.10A, FIG.10B and FIG. 10C, according to the engine 1 of this embodiment, the volume of the intake port is reduced, and therefore it is possible to reduce not only the amount of exhaust THC and fuel consumption but also the rotation fluctuation rate. Thus, the engine 1 can improve combustion in the cylinder by reducing the volume of the intake port.

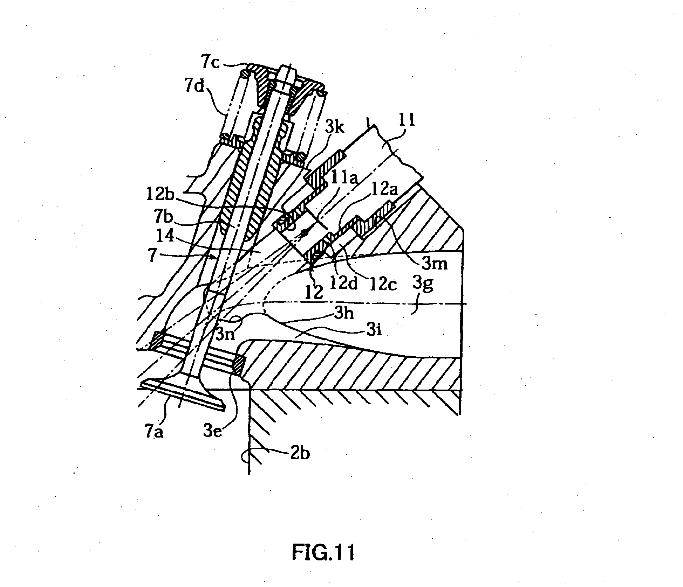

Here, with Embodiment 1, the air chamber 12c is configured to surround only the outer periphery of the injection port 12b, but as shown in FIG. 11, the air chamber 12c formed to surround the injection port 12b may be extended toward the injector 11 in such a manner as to surround the injection nozzle 11a instead.

In such a case, air for atomization can cool an area around the injection nozzle 11a to prevent the nozzle portionfrom beingoverheated,thuspreventing generation of bubbles due to a temperature rise of the fuel.

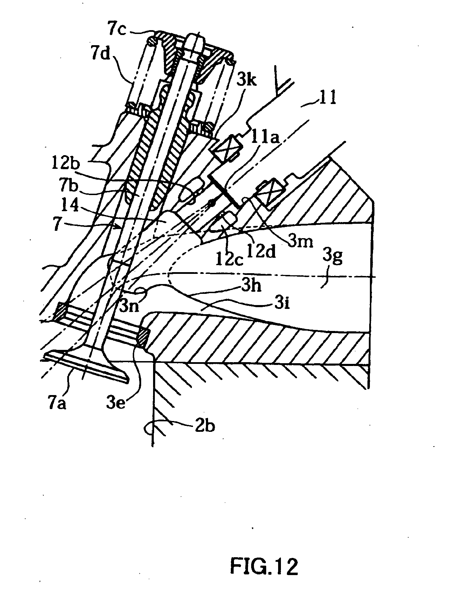

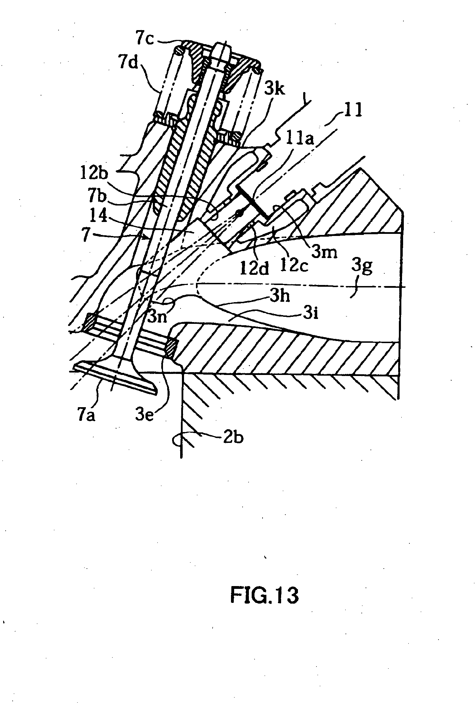

Also, with Embodiment 1, the separate holder 12 is fitted and mounted into the injection passage, but the holder and the air chamber 12c can also be formed integral with the cylinder head 3 as shown in FIG.12 and FIG.13. In this case, the air chamber 12c can be formed in such a manner as to surround only the injection port 12b as shown in FIG.12 and can be formed in such a manner as to further surround the injection nozzle 11a, too, as shown in FIG.13.

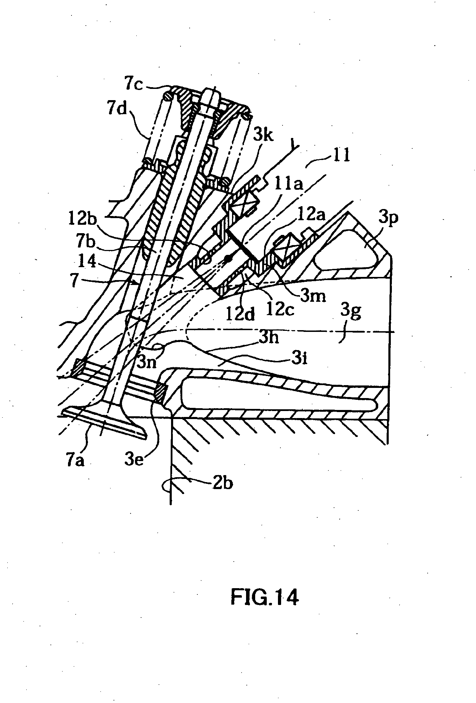

Moreover, as for cooling of the injector 11, a cooling jacket 3p can be formed close to the injector 11 as shown in FIG.14 to cool the injector 11 with cooling water.

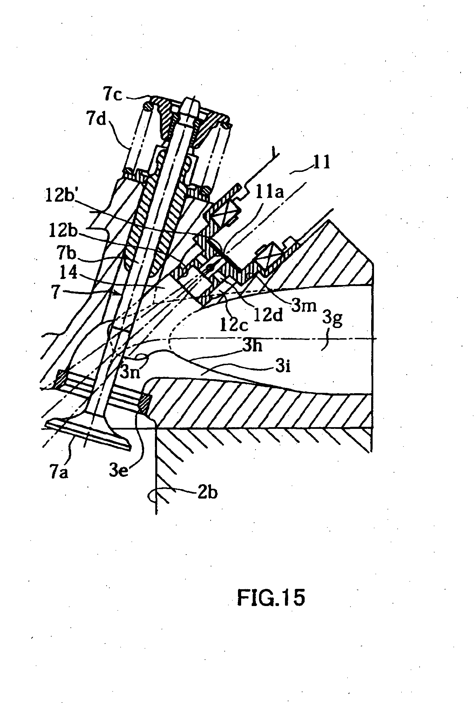

Also, while Embodiment 1 has been described with respect to the case where the injection port has the same inner diameter over its whole length, that portion of the injection port 12b, which contacts with the injection nozzle 11a, can be formed to be small in diameter as shown in FIG.15, thus providing a restriction 12b'. In such a case, there are such a function and an effect that an air flow in an area, in which an intake air and a fuel are mixed with each other, is increased in velocity to further facilitate atomization.

Furthermore, Embodiment 1 has described the case where the cylinder axis A of the engine is directed vertical, but the engine may also be mounted in the car body with the cylinder axis directed horizontal. In this case, the axis B of the intake passage is directed upward in the vertical direction.

Furthermore, according to Embodiment 1, the exhaust valve 6 and intake valve 7 arranged symmetrically with respect to the cylinder axis as the center, and the intake port 3g disposed perpendicular to the axis of the cylinder bore 2b are formed integral with the cylinder head 11. The injection nozzle 11a at an end of the injector 11 is disposed between the axis of the intake valve 7 and the center axis B of the intake port 3g and at the same time disposed close to an end of the intake port 3g on the intake valve side. Thus, the injector 11 is easily disposed in the head cylinder 3 in such a way that the diameter of an effective spot of the mixture of the fuel injected from the fuel injection port of the injection nozzle 11a and air at the intake valve openings is smaller than the radius of the intake valve openings 3e and the axis of the effective spot passes through the intake valve openings 3e to cross the inner peripheral wall of the cylinder bore 2b at an acute angle.

In addition, while the first and second throttle valves 5a, 5b are provided in Embodiment 1, only the first throttle valve 5a may be left by doing away with the second throttle valve 5b and a solenoid valve 13c may be provided midway the sub-passage 13. In this case, the opening and closingof the first throttle valve 5a is controlled behind a throttling operation in the operating period with the predetermined partial load in the same manner as the above embodiment, and the solenoid valve 13c controls a passage area of the sub-passage 13 while the first throttle valve 5a is closed. For example, the solenoid valve 13c controls idling rotation in an idle operating period and is increased in opening degree as the quantity of throttling operation increases. This example will be explained more specifically as Embodiment 2.

### (Embodiment 2)

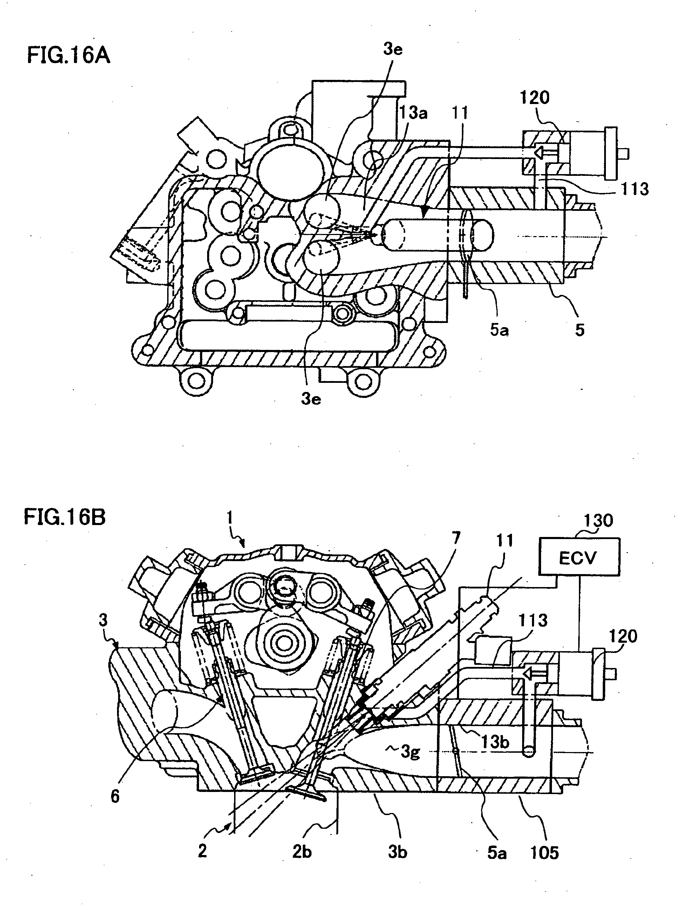

FIG.16A is a cross-sectional plan view showing a configuration of an engine according to Embodiment 2 of the present invention and FIG.16B is a cross-sectional side view showing a configuration of the engine according to Embodiment 2 of the present invention. Note that FIG.16A omits the ECU (Engine Control Unit) for ease of explanation.

The engine 100 of this Embodiment 2 has the same basic configuration as the engine 1 corresponding to Embodiment 1 shown in FIG.1 and the same components are assigned the same reference numerals and explanations thereof will be omitted and only different components will be explained.

An engine 100 removes the second throttle valve from the engine 1 shown in FIG.1 and provides an ISC (Idol Speed Control) valve 120 instead.

More specifically, the engine 100 is provided on the intake port side in the main passage of the throttle body 105, includes a first throttle valve 5a which is fully open from a state with no load to an operating period with a predetermined partial load and an ISC valve 120 for controlling a supply of air into a sub-passage 113 when the first throttle valve 5a is fully closed, and further an ECU 130 for controlling this ISC valve 120.

The throttle body 105 of the engine 100 is connected to an intake port 3g in a cylinder head 3. Then, the first throttle valve 5a is provided at an end of a main passage in the throttle body 105 on the cylinder head side. The first throttle valve 5a is communicated to a throttle grip of a steering handle (not shown) via an opening/closing mechanism.

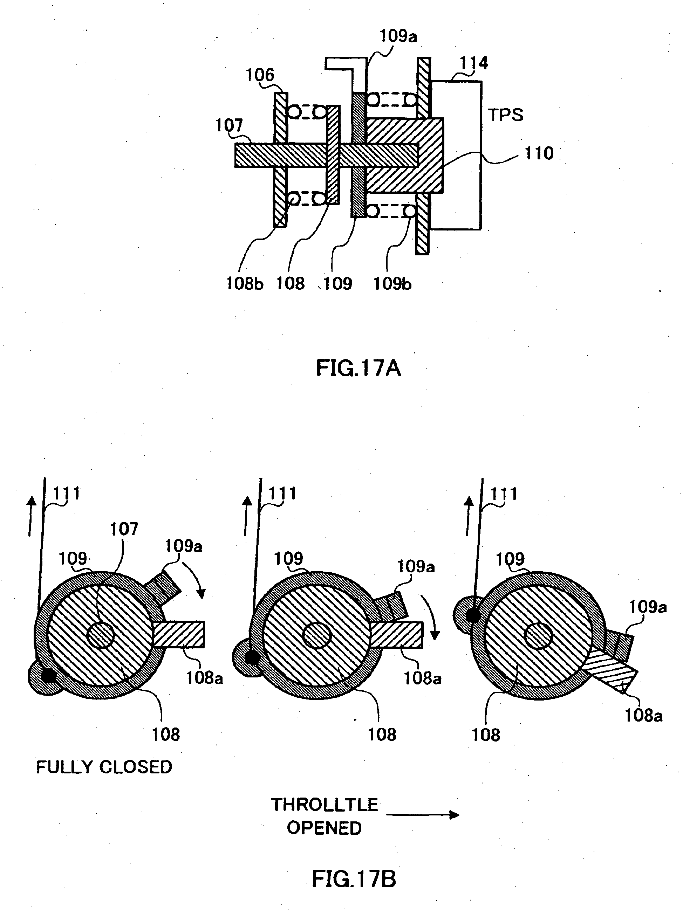

FIG.17A and FIG.17B illustrate an example of the opening/closing mechanism of the first throttle valve.

In the opening/closing mechanism shown in FIG.17A, a shaft 107 of the first throttle valve 5a protrudes outwardly from a side wall 106 of the throttle body 105 and this protruding shaft 107 penetrates two rotary plates (pulleys) 108, 109. Furthermore, the shaft 107 is supported rotatably by a bearing 110 at one end thereof.

The first rotary plate 108 is formed integral with the shaft 107 of the first throttle valve 5a which is a butterfly valve and closes or opens the first throttle valve 5a as it rotates. Aprojection 108a which protrudes in a radius direction is provided on part of the outer edge of this first rotary plate 108. This projection 108a moves in the circumferential direction as the shaft 107 rotates.

The second rotary plate 109 is provided rotatably on the shaft 107 opposite to the first rotary plate 108. This second rotary plate 109 is connected to a throttle cable 111 (see FIG.17B) connected to an accelerator grip (not shown). The throttle cable 111 opens the throttle by means of the throttle grip, that is, the accelerator is lifted by opening the throttle and this lifting operation causes the second rotary plate 109 to rotate. Furthermore, the second rotary plate 109 includes a contact strip 109a which is provided in such a manner as to protrude toward the first rotary plate 108 and contact and push the projection 108 when it rotates by a predetermined angle.

The first rotary plate 108 and second rotary plate 109 are biased by coil springs 108b, 109b so as to be close to each other. Furthermore, the first rotary plate 108 is biased by the coil spring 108b in a direction in which the first throttle valve 5a is fully closed. As shown in FIG.17B, the second rotary plate 109 is biased by the coil spring 109b so that the contact strip 109a is disposed away from the projection 108a when the first throttle valve 5a is fully closed, that is, in a non-load condition in which the accelerator is not opened.

Then, by opening the accelerator from the fully closed state and through the operation of lifting the slot cable 111, the second rotary plate 109 rotates and the contact strip 109a moves in the direction in which it goes closer to the projection 108a through this rotation. Then, the contact strip 109a presses the projection 108a causing the first rotary plate 108 to rotate.

This configuration provides a phase difference between the degree of opening of the accelerator and the degree of opening by the operation of the first throttle valve 5a and the first throttle valve 5a does not operate until the degree of opening of the accelerator increases to a certain extent and from that point the degree of opening changes with certain linearity.

In this FIG.17A, a TPS (Throttle Position Sensor) 114 for detecting the state of rotation of the second rotaryplate 109 is provided to detect the degree of opening of the accelerator and outputs the degree of opening detected to an ECU 130. It is also possible to provide the accelerator with a sensor for detecting the degree of opening of the accelerator instead of this TPS 114, output the degree of opening of the accelerator detected by this sensor to the ECU 130 and control the amount of operation of the ISC valve 120.

Furthermore, the throttle body 105 is provided with a sub-passage 113 having the same function and effect as those of the sub-passage 13 in FIG.1 on an upstream side of the first throttle valve 5a, branched from the main passage. The ISC valve 120 is provided midway this sub-passage 113.

The ISC valve 120 has a structure including a rotary valve, butterfly valve and linear solenoid, etc., and the degree of opening thereof is controlled by the ECU 130 to control the flow rate of air in the sub-passage 113.

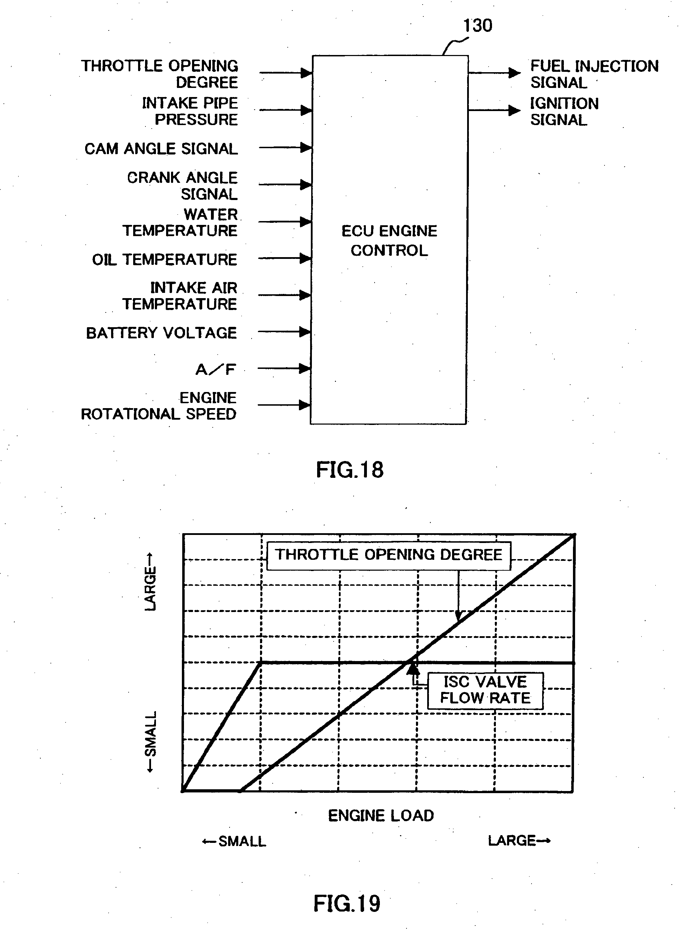

FIG.18 is block diagram showing an example of the ECU that controls the operation of the engine 100 according to this Embodiment 2.

As shown in FIG.18, the ECU 130 outputs an ignition timing control signal according to the operating state of the engine based on the throttle opening degree of the first throttle valve 5a (engine load), the pressure of the intake pipe, cam angle signal, crank angle signal, temperature of engine cooling water, temperature of fuel oil, temperature of intake air, battery voltage, A/F and engine rotational speed input and outputs the amount of fuel injection and a fuel injection timing control signal to the injector 11.

Furthermore, the ECU 130 calculates the amount of operation of the ISC valve 120 based on the rotation operation of the second rotary plate 109 measured by the TPS 114, that is, the accelerator opening degree and outputs a control signal to the ISC valve 120 to thereby control the air flow rate in the sub-passage 113. Note that input signals used for various types of control of the ECU 130 are not limited to the above described signals. That is, the ECU 130 may also control the air flow rate of the sub-passage 113, output an ignition timing control signal to an ignition circuit or output the amount of fuel injection and a fuel injection timing control signal to the injector 11 by using signals different from the above described input signals as appropriate.

FIG.19 shows an operating state of the engine shown in FIG.16.

As shown in FIG.19, when the accelerator is opened from a state of the engine with no load, air is supplied by the ISC valve 120 into the sub-passage 113 first and the air is supplied into the cylinder bore 2b by only the ISC valve 120 up to a predetermined low load state. Then, when the predetermined low load state is reached, the first throttle valve 5a opens.

In this way, by the ISC valve 120 adjusting the air flow rate in the sub-passage 113, the engine 100 can fully close the first throttle valve from a state with no load to an operating period with predetermined partial load and control the load in a period with low-speed rotation, low load and a large amount of air. Furthermore, since the injector 11 is directly mounted on the cylinder head 3 and the volume of the intake port 3g is reduced compared to a conventional structure, the speed of response to a variation in the amount of intake air supplied into the cylinder bore 2b by opening and closing of the throttle valve 5a is increased.

### (Embodiment 3)

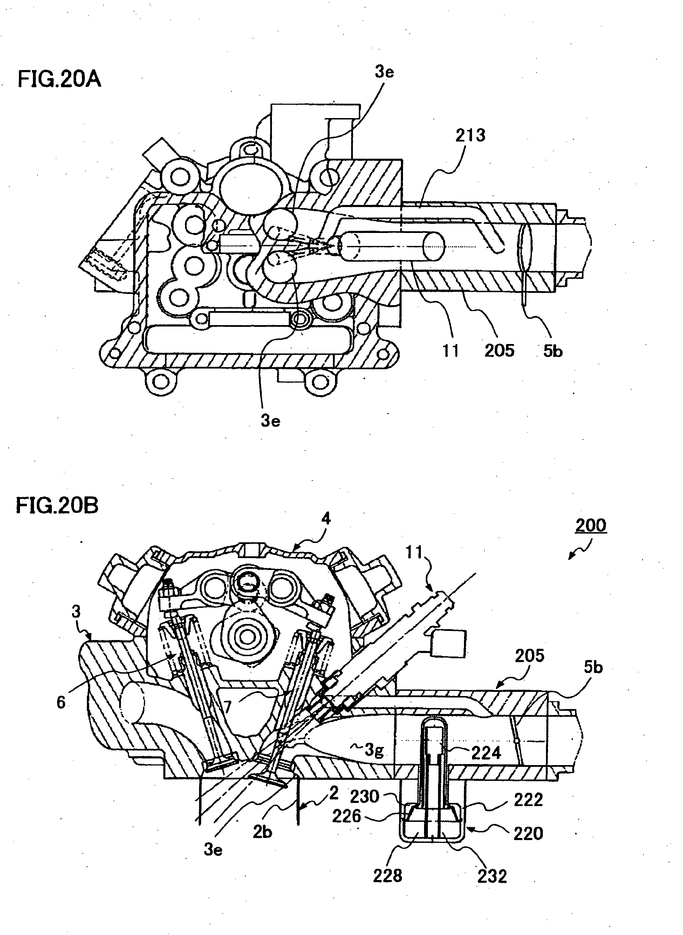

FIG.20A is a cross-sectional plan view showing a configuration of an engine according to Embodiment 3 of the present invention and FIG.20B is a cross-sectional side view showing a configuration of the engine according to Embodiment 3 of the present invention.

An engine 200 of this Embodiment 3 provides a suction piston 220 instead of the first throttle valve 5a in the engine 1 corresponding to Embodiment 1 shown in FIG.1 and the rest of the configuration is the same as the basic configuration of the engine 1. Therefore, the same components are assigned the same reference numerals and explanations thereof will be omitted and only different components will be explained.

That is, the engine 200 includes a second throttle valve 5b provided on an upstream side of a branch of a sub-passage 213 on a main passage in a slot body 205 and a suction piston 220 provided downstream of the branch, which opens or closes according to the flow rate of air in the main passage.

The suction piston 220 moves forward or backward in the main passage based on an intake negative pressure and changes the cross-sectional area of the interior of the main passage to thereby adjust the flow rate of the air in the main passage.

Especially, the suction piston 220 keeps the main passage fully closed from the fully closing state of the second throttle valve 5b to a predetermined degree of opening.

More specifically, the suction piston 220 includes a diaphragm chamber 222 formed integral with the throttle body 205 and a piston 224 that moves forward or backward in the main passage of the throttle body 205.

The diaphragm chamber 222 includes a first chamber 228 and a second chamber 230 partitioned by an elastic diaphragm 226. The first chamber 228 penetrates the diaphragm 226 and is communicated to the interior of the piston 224.

A negative pressure port (not shown) is formed at one end of the piston 224 to introduce an intake negative pressure into the first chamber 228. A spring 232 for biasing the piston 224 in a forward direction is provided between the bottom surface of the diaphragm chamber 222 and the bottom part of the piston 224. An intake negative pressure introduced into the piston 224 acts on the piston 224 in the backward direction against the spring 232.

Furthermore, the second chamber 230 on the main passage side partitioned by the diaphragm 226 is communicated to outside and takes in the atmosphere. When the atmosphere acts on this second chamber 230, a force according to the pressure difference between the first chamber 228 and second chamber 230 acts on the diaphragm 222. This causes the piston 224 to move forward or backward in the opening or closing direction of the main passage.

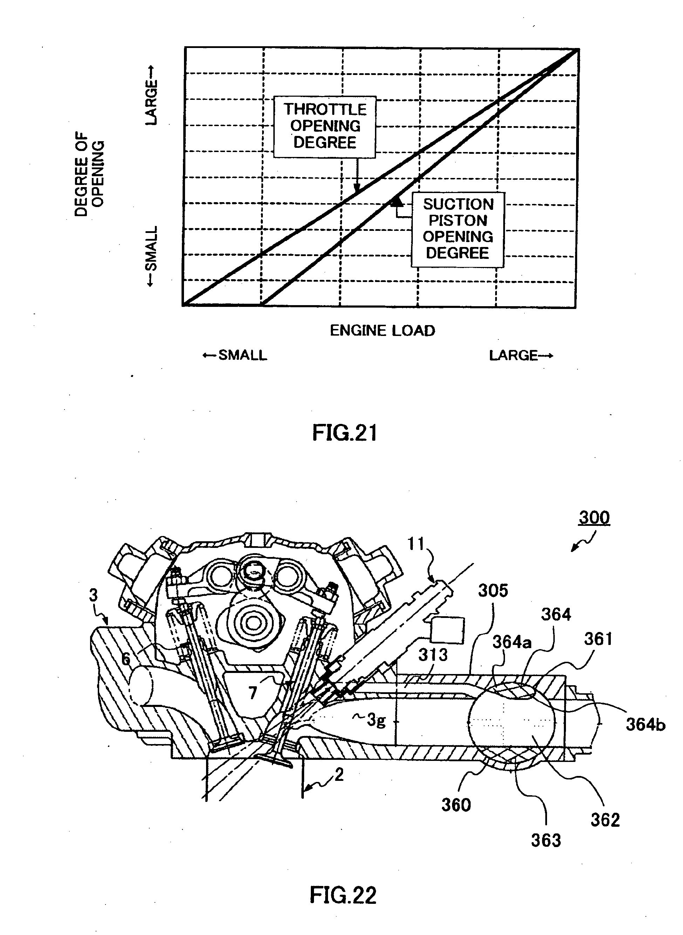

FIG.21 shows an operating state of the engine shown in FIG.20.

This suction piston 220 increases the throttle opening degree in the main passage as the degree of opening of the second throttle valve 5b increases as shown in FIG.21, but when the second throttle valve 5b is fully closed, no air flows downstream, and therefore the suction piston 220 also closes the interior of the main passage.

Then, when the throttle valve 5b is opened, a load starts to apply to the engine, but the suction piston 220 closes the main passage. Thus, in a low-load condition, the main passage is closed on the downstream side and therefore air is supplied into the sub-passage 213. Thus, in a period with low load, it is possible to improve atomization of fuel atomization through the air from the sub-passage 213. Furthermore, the injection nozzle 11a of the injector 11 is disposed close to a point between the axis of the intake valve 7 and an end of the intake port 3g on the intake valve side. Therefore, the air-fuel mixture from the injection nozzle 11a is directly injected into the cylinder bore 2b via the intake valve openings 3e.

According to this embodiment, one slot valve is used unlike an engine using two throttle valves, which makes it possible to reduce manufacturing cost. Furthermore, by the suction piston 220 controlling the flow rate of the air flowing through the main passage, even if the second throttle valve 5b provided upstream is abruptly opened and the abruptly increased air flows into the main passage, it is possible to suppress the increase, stabilize the air flow and prevent worsening of the manipulability. Furthermore, it is also possible to switch between the main passage and sub-passage without any electrical control. Furthermore, since the injector 11 is directly mounted on the cylinder head 3 and the volume of the intake port 3g is made smaller than that of the conventional structure, the speed of response to a variation in the amount of intake air supplied into the cylinder bore 2b by opening and closing of the throttle valve 5a is increased.

### (Embodiment 4)

FIG.22 is a cross-sectional side view showing a configuration of an engine according to Embodiment 4 of the present invention.

An engine 300 of this Embodiment 4 has a configuration including a throttle body provided with a rotary valve instead of the first throttle valve 5a and second throttle valve 5b in the engine 1 corresponding to Embodiment 1 shown in FIG.1 and the rest of the configuration is the same as the basic configuration of the engine 1. Therefore, the same components are assigned the same reference numerals and explanations thereof will be omitted and only different components will be explained.

A throttle body 305 includes a main passage communicated to an intake port 3g of a cylinder head 3 and a sub-passage 313 which is branched from the main passage and opened in the vicinity of an injection nozzle 11a of an injector 11, an open end of which is mounted on a cylinder head 3.

Furthermore, the throttle body 305 also includes a rotary valve 360 which supplies air into at least one of the sub-passage 313 and intake port 3g according to the throttle opening degree at a branch position of the sub-passage 313.

The rotary valve 360 is configured so as to rotate according to the degree of opening of the accelerator and only supply air into the sub-passage from a state in which the throttle is fully closed to a predetermined degree of opening.

More specifically, the rotary valve 360 includes a body 361 which has a circular side view, a passage 362 which penetrates the body 361 in a direction perpendicular to the axis of the body 361, a first valve body 363 and a second valve body 364 arranged opposite to each other on both sides of the passage 362.

The body 361 is formed rotatably centered on an axis according to the degree of opening of the accelerator, and one opening of the passage 362 has a size to provide communication to both the downstream side of the main passage and the sub-passage 313 and the other opening has a size to provide communication to the upstream side of the main passage.

The first valve body 363 has an bow-shaped cross section forming part of the outer surface of the body 361, the length of the chord portion is longer than the sum of the diameter of the main passage and the diameter of the sub-passage 313 and when the body 361 rotates, it closes at least one of the main passage and sub-passage 313.

Furthermore, the first valve body 363 is formed in such a way that the inner surface of the first valve body 363 becomes level with the bottom surface of the throttle body 305 at a predetermined position when the body 361 is rotated.

The second valve body 364 forms part of the outer surface of the body 361 and has an outer surface formed so as to be able to close the upstream side of the main passage. Taper sections 364a, 364b are provided at both ends of the outer surface which extends in parallel to the axis of the body 361 so that the openings at both ends of the passage 362 are widened.

In this engine 300, the rotary valve 360 rotates by an amount corresponding to the degree of opening of the accelerator and a supply of air into the main passage and sub-passage 313 is controlled by this rotation.

That is, when the accelerator is fully open, the rotary valve 360 is disposed in the throttle body 305 so that all the air flows from upstream of the main passage to both downstream of the main passage and the sub-passage 313 (see FIG.22).

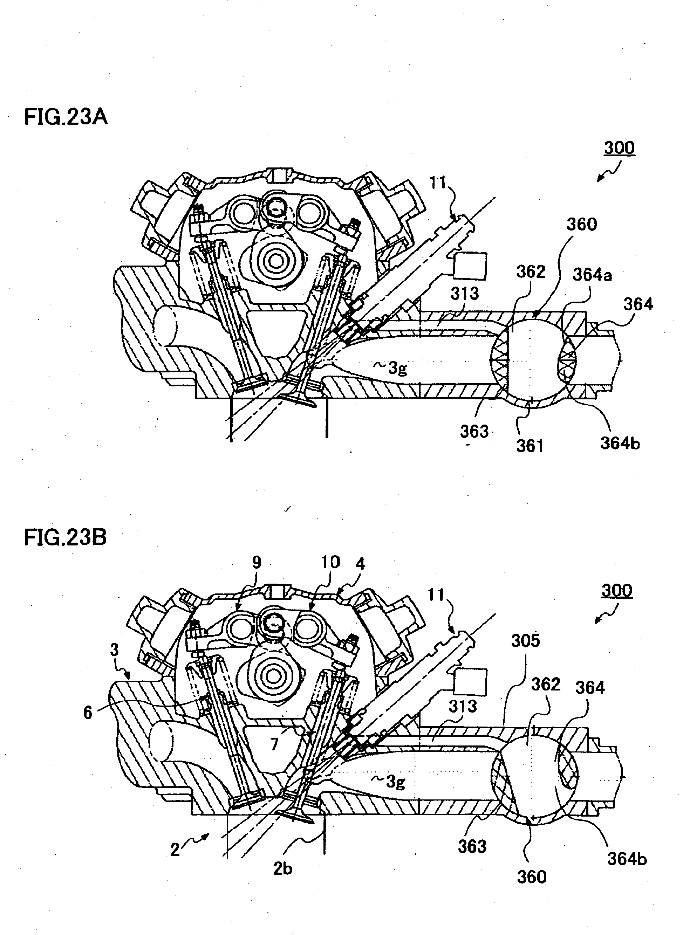

FIG.23A and FIG.23B show a state in which air is supplied to the engine in FIG.22, FIG.23A is a cross-sectional side view showing a state of a rotary valve when an air supply path is fully closed and FIG.23B is a cross-sectional side view showing a state of the rotary valve in an operating period with a low load.

As shown in FIG.23A, when the accelerator is fully closed, the rotation of the body 361 causes the first valve body 363 to be disposed at a position to close the downstream of the main passage and the sub-passage 313 and the second valve body 364 to be disposed at a position to close the upstream side of the main passage.

As shown in FIG.23B, in an operating period with a low load at a predetermined degree of opening of the accelerator (quantity of throttling operation), the rotary valve 360 positions the first valve body 363 and the second valve body 364 at positions at which air is only supplied into the sub-passage 313. More specifically, the first valve body 363 is positioned so as to close only the main passage, while the second valve body 364 is positioned so as to close part of the upstream side of the main passage.

As shown above, according to the present invention, it is possible to mechanically supply air into the cylinder bore 2b according to the degree of opening of the accelerator through the rotation of the rotary valve 360. That is, through the rotation of the rotary valve 360, it is possible not only to control the air supply when the accelerator is fully closed but also to optimally supply air via the sub-passage 313 in an operating period with a low load in which air is not flown into the main passage. Furthermore, it is also possible to allow a quantity of air corresponding to the degree of opening of the accelerator to flow through the main passage and sub-passage. Furthermore, it is possible to reduce the number of parts compared to the engine 1 according to the first embodiment without using two costly throttle valves, and reduce the number of man-hours for assembly accordingly. Furthermore, unlike a butterfly valve generally used as a throttle valve, there is no need for a shaft provided in the center of rotation, and therefore it is possible to secure a greater period of opening when the rotary valve is fully open. Moreover, the structure in which the injector 11 is directly mounted on the cylinder head 3 and the volume of the intake port 3g is made smaller than that of the conventional structure increases the speed of response to a variation in the quantity of intake air supplied into the cylinder bore 2b through opening and closing of the rotary valve 360.

Note that the first valve body 363 and second valve body 364 of the rotary valve 360 can have any shape if they at least have the same function and effect as those of the aforementioned first valve body 363 and second valve body 364.

For example, the taper section 364b of the second valve body 364 may also be shaped with a gradient instead of curvature.

### (Modification examples)

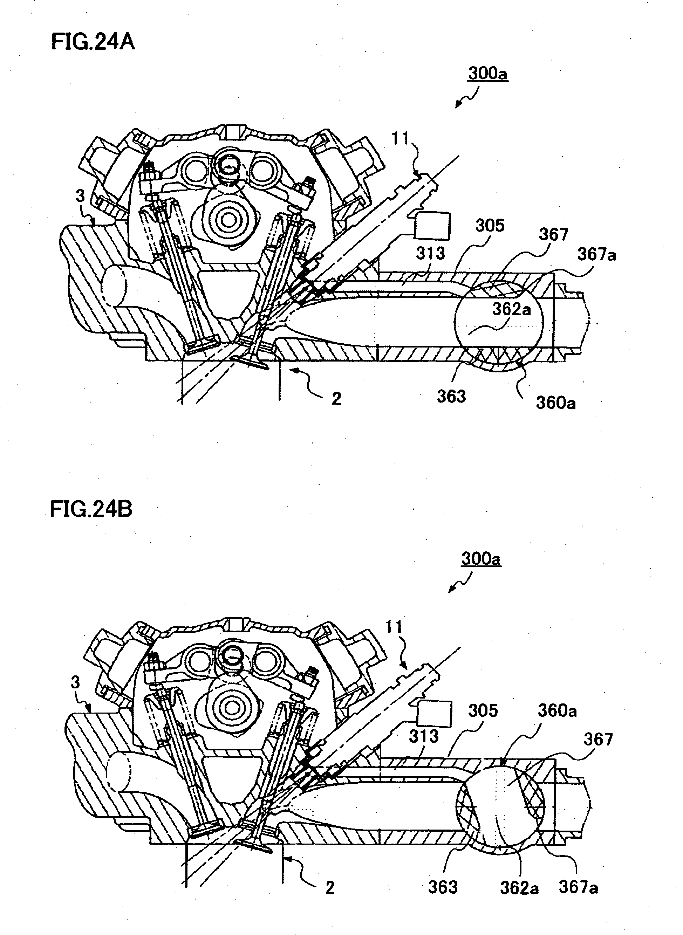

FIG.24A and FIG.24B illustrate an engine which is a modification example 1 of Embodiment 4, FIG.24A being a cross-sectional side view showing an accelerator fully open state of the engine and FIG.24B being a cross-sectional side view showing a state of the rotary valve in an operating period with a low load of the engine.

An engine 300a shown in FIG.24A is the engine 300 shown in FIG.22 with only the shape of the valve body of the rotary valve, that is, the shape of the passage modified and the rest of configuration other than the rotary valve is the same as the basic configuration of the engine 300. Therefore, the same components are assigned the same reference numerals and explanations thereof will be omitted and only different components will be explained.

An engine 300a shown in FIG.24A is configured so as to only supply air into the main passage when the rotary valve is fully open.

In the rotary valve 360a of the engine 300a, the diameter of the opening of a passage 362a on the downstream side when fully open is the same as the diameter of the main passage. That is, the rotary valve 360a includes a first valve body 363 which closes, as it rotates, at least one of the downstream side of a main passage and a sub-passage 313 and a second valve body 367 which allows air to be supplied into the sub-passage when the first valve body 363 closes the downstream side of the main passage.

The second valve body 367 is provided with a taper section 367a with curvature at an end on the upstream side so that the opening of the passage on the upstream side is widened.

Then, as shown in FIG.24B, in the engine 300a of modification example 1, the first valve body 363 closes only the downstream of the main passage on the downstream side in an operating period with a low load and air is supplied into the passage 362a through the taper section 367a of the second valve body 367 on the upstream side. The air in the passage 362a is guided to the sub-passage 313 along the chord portion of the first valve body 363, passes through the sub-passage 313, is mixed with a fuel and injected into the cylinder.

According to this engine 300a, air flows only through the main passage when fully open, and therefore the intake path of the cylinder in a fully open state needs not be separated into the main passage and sub-passage but can remain as one path, thus preventing deterioration of performance caused when air is introduced through two paths.

### (Modification example 2)

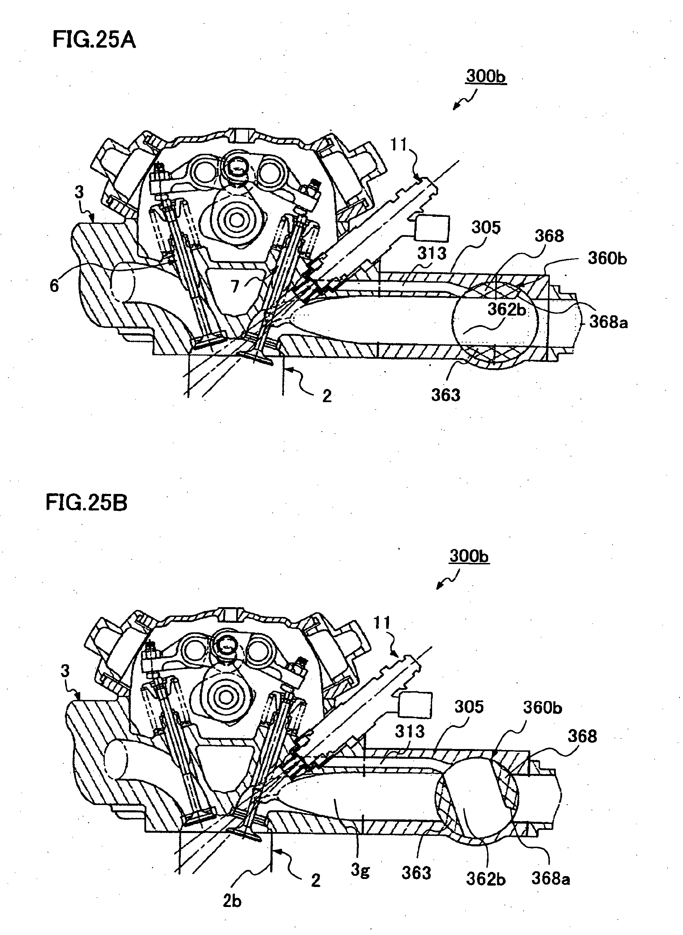

FIG.25A and FIG.25B illustrate an engine which is modification example 2 of Embodiment 4, FIG.25A being a cross-sectional side view showing an accelerator fully open state of the engine and FIG.25B being a cross-sectional side view showing a state of a rotary valve in an operating period with a low load of the engine.

An engine 300b is the engine 300a shown in FIG.24 with only the shape of the valve body of the rotary valve, that is, the shape of the passage modified and the rest of configuration other than the rotary valve is the same as the basic configuration of the engine 300.

Therefore, the same components are assigned the same reference numerals and explanations thereof will be omitted and only different components will be explained.

More specifically, a rotary valve 360b of the engine 300b includes a second valve body 368 having an inclined surface provided with a gradient instead of the taper section 367a having curvature at an end of the second valve body 368 on the upstream side of the engine 300a. That is, the second valve body 368 is provided with a taper section 368a with a gradient at an end on the upstream side.

The engine 300b is configured so as to only supply air into the main passage when the rotary valve is fully open as with the engine 300a of modification example 1.

In the rotary valve 360b of the engine 300a, the opening of the passage 362b on the downstream side has the same diameter as the diameter of the main passage when fully open.

The engine 300b of modification example 2 only supplies air into the main passage when the rotary valve 360b is fully open as shown in FIG.25A. Furthermore, in an operating period with a low load, as shown in FIG.25B, the first valve body 363 closes only the main passage on the downstream side, while on the upstream side, the outer periphery of the second valve body 368 closes the upstream side and allows air to be introduced into the passage 362b via the taper section 368a. The air introduced into the passage 362b is guided to the sub-passage 313 along the chord portion of the first valve body, introduced into the sub-passage, mixed with a fuel to be an air-fuel mixture at the output of the sub-passage and injected into the cylinder.

According to these engines 300a, 300b, air flows only through the main passage when fully open, which requires only one intake path of the cylinder when fully open without dividing it into the main passage and sub-passage, thus preventing deterioration of performance in the case of introducing air from two paths.

### Industrial Applicability

The present invention is applicable to an engine with a fuel injection apparatus mounted in a motorcycle or automobile, etc.

## Claims

1. An engine comprising:
an air supply section that supplies air into a cylinder;
a cam shaft (8) for both intake and exhaust valve (7,6) of the engine, said cam shaft (8) is rotatably arranged between the exhaust valve (6) and the intake valve (7), and
an injector (11) disposed at such an angle that a fuel injection port (11a) is arranged opposite to intake valve openings (3e) of said cylinder and a mixture of a fuel injected from said fuel injection port (11a) and said air generates air motion in said cylinder, wherein
the air-fuel mixture is directly injected from said intake valve openings (3e) which are opened during fuel injection of said injector (11) into said cylinder to generate said air motion,
said cam shaft (8) is arranged to be offset a distance (a) from a cylinder axis (A), an angle (θ2) of the intake valve (7) relative to the cylinder axis (A) is correspondingly set to be smaller than an angle (θ1) of the exhaust valve (6) relative to the cylinder axis (A), the intake valve (7) is arranged in uprights to be close to the cylinder axis (A) as compared with the exhaust valve (6), and
said injector (11) has said fuel injection port (11a) disposed between an axis of the intake valve(7) and a center axis (B) of an intake port (3g), close to an end of said intake port (3g) on the intake valve side.

2. An engine according to claim 1, wherein the injector (11) is disposed in such a way that a distance from opening planes of the intake valve openings (3e) to the fuel injection port (11a) is no greater than 4.0 cm.

3. An engine according to claim 1, wherein said injector (11) is disposed in such a way that the diameter of an effective spot of a mixture of a fuel injected from said fuel injection port (11a) and said air at said intake valve openings (3e) is smaller than the radius of said intake valve openings (3e) and the axis of said effective spot passes through said intake valve openings (3e) and crosses an inner wall (2b) of said cylinder.

4. An engine according to claim 1, wherein said air supply section comprises a main passage connected to an intake port (3g) and a sub-passage (13, 113, 213, 313) which is branched from the main passage and an opening end of which is disposed close to said fuel injection port (11a).

5. An engine according to claim 4, wherein first and second throttle valves (5a, 5b) are disposed at positions with a branch position of said sub-passage (13) in said main passage in between;
the first throttle valve (5a) is fully closed from a no-load state to an operating period with a predetermined partial load; and
the second throttle valve (5b) is set to a degree of opening according to a throttling operation.

6. An engine according to claim 4, further comprising:
a throttle valve (5a) provided on said intake port side in said main passage and fully closed from a no-load state to an operating period with a predetermined partial load; and
a control valve (13c, 120) that controls a supply of air into said sub-passage (13, 113) when said throttle valve (5a) is fully closed.

7. An engine according to claim 4, further comprising:
a throttle valve (5b) provided on an upstream side of the branch position of said sub-passage (213) in said main passage; and
a suction piston (220) provided downstream of said branch position, which opens or closes according to the flow rate of air in said main passage,
wherein said suction piston (220) is kept in a fully closed state from the fully closed state to a predetermined degree of opening of said throttle valve (5b).

8. An engine according to claim 4, further comprising a rotary valve (360) that supplies air into at least one of said sub-passage (313) and said intake port (3g) according to the throttle opening degree at the branch position of said sub-passage (313) in said main passage, wherein said rotary valve (360) only supplies air into said sub-passage (313) from a fully open state to a predetermined degree of opening of the throttle.

9. An engine according to claim 4, further comprising:
an injection port (12b) that conducts a fuel injected from said fuel injection port (11a) toward said intake valve openings (3e);
an annular air chamber (12c) that surrounds said injection port (12b) and at the same time surrounds said fuel injection port (11a); and
communication holes (12d) that communicate said air chamber (12c) with the interior of said injection port (12b),
wherein a downstream-end opening of said sub-passage (13, 113, 213, 313) is connected to said air chamber (12c), and an axis of the communication hole (12d) disposed on said downstream-end opening of said sub-passage (13, 113, 213, 313) forms a predetermined angle or greater relative to the axis of the downstream-end opening of said sub-passage (13, 113, 213, 313).

10. An engine according to claim 9, wherein said predetermined angle is 45 degrees.

## Patentansprüche

1. Ein Motor, der umfasst:
einen Luft-Zufuhr-Abschnitt, der Luft in einen Zylinder zuführt;
eine Nockenwelle (8) für beide Einlass- und Auslass-Ventil (7,6) des Motors, diese Nockenwelle (8) ist drehbar zwischen dem Auslass-Ventil (6) und dem Einlass-Ventil (7) angeordnet, und
einen Einspritzer (11) positioniert, in so einem Winkel, dass ein Kraftstoff-Einspritz-Anschlusses (11a) gegenüber zu Einlass-Ventilöffnungen (3e) des Zylinders angeordnet ist und eine Mischung von Kraftstoff, eingespritzt von diesem Kraftstoff-Einspritz-Anschluss (11a), und dieser Luft eine Luft-Bewegung in diesem Zylinder erzeugt, wobei
die Luft-Kraftstoff-Mischung direkt von diesen Einlass-Ventilöffnungen (3e) eingespritzt ist, die während der Kraftstoff-Einspritzung von diesem Einspritzer (11) in diesem Zylinder geöffnet sind, um diese Luft-Bewegung zu erzeugen,
diese Nockenwelle (8) ist angeordnet, so dass sie um einen Abstand (a) und einer Zylinderachse (A) versetzt ist, ein Winkel (θ2) des Einlass-Ventils (7) relativ zu der Zylinderachse (A) ist entsprechend kleiner gesetzt als ein Winkel (θ1) des Auslass-Ventils (6) relativ zu der Zylinderachse (A), das Einlass-Ventil (7) ist aufrecht angeordnet nahe zu der Zylinderachse (A) im Vergleich zu dem Auslass-Ventil (6),
und dieser Einspritzer (11) hat diesen Kraftstoff-Einspritz-Anschluss (11a) positioniert zwischen einer Achse des Einlass-Ventils (7) und einer Mittenachse (B) eines Einlass-Anschlusses (3g) nahe zu einem Ende von diesem Einlass-Anschluss (3g) an der Einlass-Ventil-Seite.

2. Ein Motor gemäß Anspruch 1, wobei der Einspritzer (11) in so einer Weise positioniert ist, dass ein Abstand von Öffnungs-Ebenen der Einlass-Ventilöffnungen (3e) zu den Kraftstoff-Einspritz-Anschluss (11a) nicht größer als 4,0 cm ist.

3. Ein Motor gemäß Anspruch 1, wobei dieser Eispritzer (11) in so einer Weise positioniert ist, dass ein Durchmesser eines effektiven Spots einer Mischung von Kraftstoff eingespritzt von diesem Kraftstoff-Einspritz-Anschluss (11a) und dieser Luft an diesen Einlass-Ventilöffnungen (3e) kleiner ist als der Radius von diesen Einlass-Ventilöffnungen (3e) und die Achse von diesem effektiven Spot erstreckt sich durch diese Einlass-Ventilöffnungen (3e) und schneidet eine innere Wand (2b) von diesem Zylinder.

4. Ein Motor gemäß Anspruch (1), wobei dieser Luft-Zufuhr-Abschnitt einen Haupt-Durchgang, verbunden mit einem Einlass-Anschluss (3g), und einen Neben-Durchgang (13, 113, 213, 313) umfasst, der von den Haupt-Durchgang abzweigt, und ein Öffnungs-Ende desselben ist nahe zu diesem Kraftstoff-Einspritz-Anschluss (11a) positioniert.

5. Ein Motor gemäß Anspruch 4, wobei erste und zweite Drosselventile (5a, 5b) positioniert sind an Positionen mit einer Abzweig-Position von diesem Neben-Durchgang (13) in diesem Haupt-Durchgang dazwischen;
das erste Drosselventil (5a) ist vollständig geschlossen von einem Nicht-Last-Zustand zu einer Betriebsperiode mit einer vorgegebenen Teil-Last; und das zweite Drosselventil (5b) ist auf einem Grad einer Öffnung gemäß zu einem Drosselbetrieb gesetzt.

6. Ein Motor gemäß Anspruch 4, der weiterhin umfasst:
ein Drosselventil (5a) vorgesehen an dieser Einlass-Anschluss-Seite in diesem Haupt-Durchgang und vollständig geschlossen von einem Nicht-Last-Zustand zu einer Betriebsperiode mit einer vorgegebenen Teil-Last; und
ein Steuerventil (13c, 120), welches eine Zufuhr von Luft in diesen Neben-Durchgang (13, 113) steuert, wenn dieses Drosselventil (5a) vollständig geschlossen ist.

7. Ein Motor gemäß Anspruch 4, der weiterhin umfasst:
ein Drosselventil (5b), vorgesehen an einer Stromauf-Seite der Abzweig-Position von diesem Neben-Durchgang (213) in diesem Haupt-Durchgang; und
einen Saugkolben (220), vorgesehen stromab dieser Abzweig-Position, welcher gemäß zu einer Strömungs-Rate von Luft in diesem Haupt-Durchgang öffnet und
schließt, wobei dieser Saugkolben (220) in einem vollständig geschlossenen Zustand gehalten ist von dem vollständig geschlossenen Zustand zu einem vorgegebenen Grad der Öffnung von diesem Drosselventil (5b).

8. Ein Motor gemäß Anspruch 4, der weiterhin umfasst ein Drehventil (360), welches Luft in zumindest einem vom dem Neben-Durchgang (213) und diesen Einlass-Anschluss (3g) zuführt, gemäß zu dem Drosselöffnungsgrad in der Abzweig-Position von diesem Neben-Durchgang (313) in diesen Haupt-Durchgang,
wobei dieses Drehventil (360) Luft nur in diesen Neben-Durchgang (313) zuführt von einem vollständig offenen Zustand zu einem vorgegebenen Grad der Öffnung der Drossel.

9. Ein Motor gemäß Anspruch 4, der weiterhin umfasst:
einen Einspritzanschluss (12b), der Kraftstoff, eingespritzt von diesem Kraftstoff-Einspritz-Anschluss (11a), zu diesen Einlass-Ventilöffnungen (3e) zuführt;
eine umlaufende Luftkammer (12c), welche diesen Einspritzanschluss (12b) umfasst und zu derselben Zeit diesen Kraftstoff-Einspritz-Anschluss (11a) umfasst; und
Verbindungslöcher (12d), welche diese Luftkammer (12c) mit dem Inneren von diesem Einspritzanschluss (12b) verbindet,
wobei eine Stromab-End-Öffnung von diesem Neben-Durchgang (13, 113, 213, 313) mit dieser Luftkammer (12c) verbunden ist, und eine Achse des Verbindungslochs (12d), positioniert an dieser Stromab-Endöffnung von diesem Neben-Durchgang (13, 113, 213, 313), bildet einen vorgegebenen Winkel oder größer relativ zu der Achse von der Stromab-End-Öffnung von diesem Neben-Durchgang (13, 113, 213, 313).

10. Ein Motor gemäß Anspruch (9), wobei der vorgegebene Winkel 45 Grad ist.

## Revendications

1. Moteur comprenant :
une section de fourniture d'air qui délivre de l'air dans un cylindre ;
un arbre à cames (8) à la fois pour les soupapes d'admission et d'échappement (7, 6) du moteur, ledit arbre à cames (8) étant agencé de manière rotative entre la soupape d'échappement (6) et la soupape d'admission (7), et
un injecteur (11) disposé selon un angle tel qu'un orifice d'injection de carburant (11a) est agencé à l'opposé des ouvertures de soupapes d'admission (3e) dudit cylindre et le mélange du carburant injecté depuis ledit orifice d'injection de carburant (11a) et ledit air génèrent un mouvement d'air dans ledit cylindre, dans lequel
le mélange air-carburant est injecté directement depuis les ouvertures de soupapes d'admission (3e) qui sont ouvertes pendant l'injection de carburant dudit injecteur (11) dans ledit cylindre pour générer ledit mouvement d'air,
ledit arbre à cames (8) est agencé pour être décalé d'une distance (a) par rapport à l'axe du cylindre (A), l'angle (θ2) de la soupape d'admission (7) par rapport à l'axe du cylindre (A) est réglé de manière correspondante de façon à être plus petit que l'angle (θ1) de la soupape d'échappement (6) par rapport à l'axe du cylindre (A), la soupape d'admission (7) est agencée verticalement de manière à être proche de l'axe du cylindre (A) par rapport à la soupape d'échappement (6) et ledit injecteur (11) possède ledit orifice d'injection de carburant (11a) disposé entre l'axe de la soupape d'admission (7) et l'axe central (B) d'un orifice d'admission (3g), près d'une extrémité dudit orifice d'admission (3g) du côté de la soupape d'admission.

2. Moteur selon la revendication 1, dans lequel l'injecteur (11) est disposé de telle manière que la distance des plans d'ouverture des ouvertures de soupapes d'admission (3e) à l'orifice d'injection de carburant (11a) est inférieure ou égale à 4,0 cm.

3. Moteur selon la revendication 1, dans lequel ledit injecteur (11) est disposé de telle manière que le diamètre d'un point effectif de mélange de carburant injecté depuis ledit orifice d'injection de carburant (11a) et dudit air au niveau desdites ouvertures de soupapes d'admission (3e) est plus petit que le rayon desdites ouvertures de soupapes d'admission (3e) et l'axe dudit point effectif passe par lesdites ouvertures de soupapes d'admission (3e) et traverse la paroi intérieure (2b) dudit cylindre.

4. Moteur selon la revendication 1, dans lequel ladite section de fourniture d'air comprend un passage principal raccordé à un orifice d'admission (3g) et un passage secondaire (13, 113, 213, 313) qui se sépare du passage principal et dont une extrémité d'ouverture est disposée près dudit orifice d'injection de carburant (11a).

5. Moteur selon la revendication 4, dans lequel des premier et second papillons des gaz (5a, 5b) sont disposés dans des positions avec une position de séparation dudit passage secondaire (13) dans ledit passage principal intermédiaire ;
le premier papillon des gaz (5a) est entièrement fermé depuis un état à vide jusqu'à une période de fonctionnement avec une charge partielle prédéterminée ; et
le second papillon des gaz (5b) est réglé à un degré d'ouverture fonction de l'opération d'étranglement.

6. Moteur selon la revendication 4, comprenant en outre :
un papillon des gaz (5a) prévu du côté dudit orifice d'admission dans ledit passage principal et entièrement fermé depuis un état à vide jusqu'à une période de fonctionnement avec une charge partielle prédéterminée, et
une vanne de régulation (13c, 120) qui régule la fourniture d'air dans ledit passage secondaire (13, 113) lorsque ledit papillon des gaz (5a) est entièrement fermé.

7. Moteur selon la revendication 4, comprenant en outre :
un papillon des gaz (5b) prévu du côté amont de la position de séparation dudit passage secondaire (213) dans ledit passage principal ; et
un piston d'aspiration (220) prévu en aval de ladite position de séparation qui s'ouvre ou se ferme en fonction du débit d'air dans ledit passage principal,
dans lequel ledit piston d'aspiration (220) est maintenu dans un état entièrement fermé de l'état entièrement fermé jusqu'à un degré prédéterminé d'ouverture dudit papillon des gaz (5b).

8. Moteur selon la revendication 4, comprenant en outre une vanne rotative (360) qui délivre de l'air dans au moins un dudit passage secondaire (313) et dudit orifice d'admission (3g) en fonction du degré d'ouverture du papillon des gaz dans la position de séparation dudit passage secondaire (313) dans ledit passage principal,
dans lequel ladite vanne rotative (360) délivre uniquement de l'air dans ledit passage secondaire (313) depuis un état entièrement ouvert jusqu'à un degré prédéterminé d'ouverture du papillon des gaz.

9. Moteur selon la revendication 4, comprenant en outre :
un orifice d'injection (12b) qui conduit du carburant injecté depuis ledit orifice d'injection de carburant (11a) vers lesdites ouvertures de soupapes d'admission (3e) ;
une chambre à air annulaire (12c) qui entoure ledit orifice d'injection (12b) et entoure en même temps ledit orifice d'injection de carburant (11a) ; et
des trous de communication (12d) qui font communiquer ladite chambre à air (12c) avec l'intérieur dudit orifice d'injection (12b),
dans lequel une ouverture d'extrémité aval dudit passage secondaire (13, 113, 213, 313) est raccordée à ladite chambre à air (12c) et l'axe du trou de communication (12d) disposé sur ladite ouverture d'extrémité en aval dudit passage secondaire (13, 113, 213, 313) forme un angle supérieur ou égale à un angle prédéterminé par rapport à l'axe de l'ouverture d'extrémité en aval dudit passage secondaire (13, 113, 213, 313).

10. Moteur selon la revendication 9, dans lequel ledit angle prédéterminé est de 45 degrés.
